# EUROPÄISCHE PATENTSCHRIFT

(11) **EP 4 235 073 B1**
(45) Veröffentlichungstag und Bekanntmachung des Hinweises auf die Patenterteilung: **20.03.2024**
(21) Anmeldenummer: 22158314.9
(22) Anmeldetag: 23.02.2022
(51) Int. Cl.: F27D 1/00, C04B 35/64, F27D 1/16

(54) **GEBRANNTER KERAMISCHER FORMKÖRPER UND VERFAHREN ZUR HERSTELLUNG EINES GEBRANNTEN KERAMISCHEN FORMKÖRPERS UNTER VERWENDUNG VON ELEKTROMAGNETISCHER STRAHLUNG MIT EINER FREQUENZ VON MAXIMAL 300 GHZ**
FIRED CERAMIC MOULDING AND METHOD FOR MANUFACTURING A FIRED CERAMIC MOULDING USING ELECTROMAGNETIC RADIATION HAVING A MAXIMUM FREQUENCY OF 300 GHZ
PIÈCE MOULÉE EN CÉRAMIQUE CUITES ET PROCÉDÉ DE FABRICATION D'UNE PIÈCE MOULÉE EN CÉRAMIQUE CUITE UTILISANT UN RAYONNEMENT ÉLECTROMAGNÉTIQUE D'UNE FRÉQUENCE MAXIMALE DE 300 GHZ

(43) Veröffentlichungstag der Anmeldung: 30.08.2023
(73) Patentinhaber: ERLUS AKTIENGESELLSCHAFT, 84088 Neufahrn (DE)
(72) Erfinder: ACKERHANS, Carsten, 84066 Mallersdorf-Pfaffenberg (DE); HACKER, Alois, 95659 Arzberg (DE); KREUPL, Franz, 80802 München (DE); STOLL, Alexander Josef, 85354 Freising (DE)
(74) Vertreter: Louis Pöhlau Lohrentz

(56) Entgegenhaltungen:
- WO-A1-01/04558
- WO-A1-2004/009513
- DE-A1- 19 859 292
- DE-A1-102005 018 323
- DE-A1-102005 032 345

## Beschreibung

Die vorliegende Erfindung betrifft einen gebrannten keramischen Formkörper und ein Verfahren zur Herstellung eines gebrannten keramischen Formkörpers unter Verwendung von elektromagnetischer Strahlung mit einer Frequenz von maximal 300 GHz.

### Beschreibung

Keramische Formkörper, beispielsweise in Form von Dachziegeln, Fassadenplatten, Klinkersteinen, Ziegelsteinen, Schamottesteinen, Muffen oder Schornsteinelementen, sind im Stand der Technik bekannt und werden im Allgemeinen aus einer Tonmineralpartikel enthaltenden Formmasse hergestellt. Zunächst wird dabei wenigstens ein Formkörpergrünling umfassend Tonmineralpartikel bereitgestellt. Anschließend wird der wenigstens eine Formkörpergrünling optional getrocknet, wobei ein zumindest teilweise getrockneter Formkörpergrünling erhalten wird. Nachfolgend wird der wenigstens eine Formkörpergrünling und/oder der zumindest teilweise getrocknete Formkörpergrünling gebrannt. Hierdurch wird wenigstens ein gebrannter keramischer Formkörper erhalten.

Aus der DE 3918746 A1 ist bekannt, dass sich Tunnelöfen zum Brennen von Ziegeln durchgesetzt haben. Diese Tunnelöfen besitzen einen durchgehenden Behandlungskanal in Form eines Tunnels, wobei sich im Behandlungskanal zwischen Ofeneinfahrt und Ofenausfahrt eine Aufheizzone, eine Brennzone und eine Kühlzone befinden. Die zu brennenden Gegenstände werden auf Wagen mit feuerfester Plattform und Dichtung von der Ofeneinfahrt zur Ofenausfahrt transportiert. Hierbei wird in der Brennzone durch Energiezufuhr das für den Ablauf des Verfahrens notwendige Temperaturniveau hergestellt. Im Gegenstrom zur Transportrichtung der Gegenstände wird ein an der Ofenausfahrt eingeblasener oder eingesaugter Luftstrom durch den Behandlungskanal hindurchgeleitet, der einen Teil der Verbrennungsluft liefert und in der Brennzone in einen Rauchgasstrom übergeht.

Die DE 3625322 C1 beschreibt eine Anlage zum Trocknen von Formkörpergrünlingen, bestehend aus einem Tunneltrockner, bei dem die mit Formkörpergrünlingen beladenen Tunnelwagen auf einem Gleis den Tunneltrockner durchlaufen, und aus einem neben dem Tunneltrockner angeordneten Kammertrockner. Die Kammertrockner sind mit jeweils einem Gleis und mit jeweils einer zusätzlich zur Einfahröffnung angeordneten Ausfahröffnung ausgestattet. Somit können die im Tunneltrockner verwendeten Trocknerwagen auch in den Kammertrocknern eingesetzt werden.

Die DE 19516205 A1 beschreibt eine Anlage zum Trocknen und Brennen von Formkörpergrünlingen, wie Ziegel, Dachpfannen oder dergleichen. Diese Anlage besteht aus einem Tunneltrockner und einem Tunnelofen sowie einer durch dieselben führenden Transportmittel-Umfahrt und Gleisanlage. Dem Tunneltrockner und dem Tunnelofen ist eine einzige gemeinsame Transportmittel-Rückführbahn zugeordnet.

Für konventionelles Erwärmen bei der Herstellung von keramischen Materialien wird typischerweise Strahlungs- und Konvektionswärme aus einer Gas- oder elektrischen Widerstandsheizung in Tunnelöfen und -trocknern verwendet.

Die Strahlungswärme wird über die Randbereiche, insbesondere die Oberfläche, eines Formkörpergrünlings aufgenommen, wobei sich das Kernmaterial des Formkörpergrünlings in Abhängigkeit der Wärmeleitfähigkeit des verwendeten Materials langsamer erwärmt. Die Wärmeleitfähigkeit von üblicherweise zur Herstellung keramischer Formkörper verwendeten Materialien ist jedoch schlecht, so dass die Wärmeenergie nur langsam von der Oberfläche in das Kernmaterial des zu erwärmenden Formkörpergrünlings übertragen wird.

Mit anderen Worten, bei konventioneller Erwärmung handelt es sich um einen Wärmeeintrag, der überwiegend durch Strahlung und/oder Konvektion auf die Oberfläche des zu erwärmenden Formkörpers wirkt, gefolgt von einer Leitung der Wärme von der Oberfläche in das Innere, vorzugsweise in das Kernmaterial, des zu erwärmenden Formkörpergrünlings. Wenn sich ein zu großer Temperaturunterschied zwischen Kernmaterial und Randbereichen, insbesondere der Oberfläche, ausbildet, können Verformungen des erwärmten Formkörpergrünlings, aber auch innere Risse und äußere Risse auftreten. Schnelles Trocknen und/oder Brennen verschärft dieses Problem des Temperaturunterschieds aufgrund der schlechten Wärmeleitung und erhöht letztendlich die Rissbildung noch weiter. Somit führt die Nutzung der konventionellen Strahlungs- und Konvektionswärme typischerweise zu thermischen Differenzen innerhalb des zu trocknenden und/oder zu brennenden Formkörpergrünlings.

Des Weiteren tritt ein Nachteil beim Trocknen auf, da sich die Durchlässigkeit von bereits getrockneten Schichten an der Oberfläche für Wasser bzw. Wasserdampf verringert. Bei der Trocknung kann es zu einer Volumenschrumpfung des Formkörpergrünlings kommen, die zu einer erhöhten Rissbildung führen kann. Die Volumenänderung bei der Trocknung ist in den Randbereichen stärker als im Kernmaterial, was eine Rissbildung begünstigt. Um die Rissbildung gering zu halten, wird daher die konventionelle Trocknung sehr langsam durchgeführt, damit der zu trocknende Formkörpergrünling ein homogenes Temperaturprofil, einen damit verbundenen homogenen Restfeuchtegehalt und eine gleichmäßige Volumenschrumpfung aufweist. Daraus ergeben sich Trocknungszeiten von beispielsweise 20 bis 70 Stunden.

Des Weiteren kann beim eigentlichen Brennvorgang ein Temperaturunterschied zwischen Randbereich und Kernmaterial auftreten, der beispielsweise zu ungleichmäßigen Sintervorgängen im Randbereich und dem Kernmaterial führt. Insbesondere in Randbereichen können dabei während des Brennvorgangs Sinterbrücken zwischen dort vorliegenden Tonmineralpartikeln ausgebildet werden, wobei im Kernmaterial aufgrund der verzögerten Erwärmung noch keine oder erst wenige Sinterprozesse stattfinden. Die ungleichmäßig verteilten Sinterbrücken können nach dem Aushärten, optional Abkühlen, des Formkörpers zu heterogenen mechanischen und strukturellen Eigenschaften im keramischen Formkörper führen, die in Spannungen innerhalb des Formkörpers resultieren können.

Vorstehende Probleme könnten durch einen langsameren und längeren Brennvorgang reduziert werden. Dies steigert jedoch die Zeit, die für einen Formkörper benötigt wird, so dass ein entsprechendes Herstellungsverfahren wohl als nicht mehr wirtschaftlich relevant betrachtet werden kann,
Wie vorstehend beschrieben, ist es also essentiell, dass der keramische Formkörper kontrolliert getrocknet und/oder gebrannt wird. Dies führt jedoch zu langen Prozesszeiten, in denen dem Formkörper kontinuierlich Energie zugeführt werden muss, wobei aufgrund der schlechten Wärmeleitfähigkeit ein großer Anteil des Energieeintrags nicht effektiv genutzt wird. Insgesamt führt dies zu einem hohen Energieverbrauch während der Formkörperherstellung, was sich letztendlich in dem CO₂-Fussabdruck des Formkörpers niederschlägt.

Die WO 2004/009513 A1 betrifft eine Verdichtung keramischer Werkstoffe mit Hilfe von elektromagnetischen Zentimeterwellen sowie ein Gefäß zur Durchführung des Verfahrens. Die DE 198 59 292 A1 betrifft einen Werkstoff auf Basis von Siliziumnitrid, dessen Herstellung und Verwendung in Mikrowellenprozessen. Die WO 01/04558 A1 betrifft eine Vorrichtung und ein Verfahren zur kontinuierlichen Mikrowellentrocknung von Keramik.

Aufgabe der Erfindung ist es, einen gebrannten keramischen Formkörper bereitzustellen, der im Vergleich zu konventionell hergestellten keramischen Formkörpern einen geringeren CO₂-Fußabdruck aufweist.

Eine weitere Aufgabe der Erfindung ist es, ein im Vergleich zu konventionellen Verfahren besonders wirtschaftliches und energiesparendes Verfahren zur Herstellung eines gebrannten keramischen Formkörpers bereitzustellen, dass darüber hinaus die benötigte Menge an fossilen Brennstoffen, die zur Erzeugung der für die Trocknung und das Brennen erforderlichen thermische Energie zumindest teilweise reduziert und damit auch den erzeugten CO₂-Ausstoß.

Die der Erfindung zugrunde liegende Aufgabe wird durch die Bereitstellung eines gebrannten keramischen Formkörpers gemäß Anspruch 1 gelöst, insbesondere wobei der gebrannte keramische Formkörper ein Kernmaterial und einen das Kernmaterial vollständig umschließenden Randbereich aufweist, wobei das Kernmaterial und der Randbereich ein spezifisches Porenvolumen aufweist, wobei das spezifische Porenvolumen des Kernmaterials um nicht mehr als 8 %, vorzugsweise um nicht mehr als 6 %, größer ist als das spezifische Porenvolumen des Randbereichs, wobei das spezifische Porenvolumen jeweils durch eine Methode nach DIN ISO 15901-1 :2019-03 (Englischer Titel: "Evaluation of pore size distribution and porosity of solid materials by mercury porosimetry and gas adsorption - Part 1: Mercury porosimetry (ISO 15901-1:2016)", Deutscher Titel: "Bewertung der Porengrößenverteilung und Porosität von Feststoffen mittels Quecksilberporosimetrie und Gasadsorption - Teil 1: Quecksilberporosimetrie (ISO 15901-1:2016)", Ausgabedatum: 2019-03) bestimmt wird, wobei der gebrannte keramische Formkörper eine Grobkeramik ist und wobei der gebrannte keramische Formkörper aus gebranntem Ton und/oder aus gebranntem Lehm und/oder Schamotte gebildet ist.

Die der Erfindung zugrundeliegende Aufgabe wird weiter durch die Bereitstellung eines Verfahrens gemäß Anspruch 8 zur Herstellung eines gebrannten keramischen Formkörpers gelöst.

Des Weiteren ist es möglich, dass der erfindungsgemäße gebrannte keramische Formkörper nach Anspruch 1 durch das Verfahren gemäß Anspruch 8 bereitgestellt wird. Weiter ist es bevorzugt, dass das Verfahren gemäß Anspruch 8 zur Herstellung des erfindungsgemäßen gebrannten keramischen Formkörpers nach Anspruch 1 in einer bevorzugten Vorrichtung durchgeführt wird.

Unter dem Begriff "gebrannter keramischer Formkörper" wird ein Formkörper verstanden, der nach dem Aushärten oder Abkühlen im Anschluss an einen Brennvorgang, zumindest in Teilbereichen stoffschlüssige Verbindungen, vorzugsweise in Form von Sinterbrücken, zwischen in dem Formkörper enthaltenen keramischen Partikeln, aufweist.

Unter dem Begriff "keramische Partikel" werden erfindungsgemäß Partikel verstanden, die im Wesentlichen ein nicht-metallisches anorganisches Material umfassen oder daraus bestehen, welches durch Einwirken von Wärmestrahlung, vorzugsweise ab einer Temperatur von 600 °C, weiter bevorzugt ab einer Temperatur von 750 °C, zumindest teilweise schmelzbar ist. Weiter bevorzugt umfassen die keramischen Partikel silikatische Keramik, vorzugsweise in Form von zerkleinerten Bestandteilen wenigstens eines gebrannten keramischen Formkörpers, beispielsweise in Form von Ziegelmehl, Ziegelsplitt oder Mischungen davon.

Unter dem Begriff "Formkörpergrünling" wird erfindungsgemäß ein Formkörper verstanden, der formstabil ist und auf ungebranntem Lehm und/oder ungebranntem Ton basiert. Ein Formkörpergrünling weist Tonmineralpartikel auf. Weiter kann ein Formkörpergrünling auch keramische Partikel beispielsweise in Form von silikatischer Keramik, vorzugsweise aus zerkleinerten Bestandteilen wenigstens eines gebrannten keramischen Formkörpers, aufweisen.

Unter dem Begriff "Tonmineral" wird erfindungsgemäß ein Schichtsilikat, wie beispielsweise Kaolinit, Illit, Smektite, Vermiculit, Montmorillonit, Chlorit, Hectorit, Saponit oder eine Mischung davon, verstanden.

Unter dem Begriff "keramischer Formkörper" wird kein Formkörper verstanden, der aus Feinkeramik, Nicht-Oxid-Keramik, Hochleistungskeramik und/oder Porzellan besteht. Der gebrannte keramische Formkörper ist ein grobkeramischer Formkörper.

Unter dem Begriff "Feinkeramik" wird Keramik mit einer homogenen Struktur und einem mittleren volumenäquivalenten Kugeldurchmesser, x_{50, 3}, in der ungebrannten Formmasse von maximal 200 µm, vorzugsweise maximal 100 µm, verstanden. Der Begriff "Grobkeramik" wird für Keramik verwendet, die einen größeren mittleren volumenäquivalenten Kugeldurchmesser, x₅₀, ₃, der ungebrannten Formmasse aufweist als die Feinkeramik. Grobkeramik wird auch als Baukeramik bezeichnet.

Der mittlere volumenäquivalente Kugeldurchmesser, x_{50, 3}, kann beispielsweise durch Laserbeugung, beispielsweise gemäß dem in der ISO 13320:2020-01 ("Particle size analysis - Laser diffraction methods", Deutscher Titel: "Partikelgrößenanalyse - Partikelmessung durch Laserlichtbeugung", Ausgabedatum: 2020-01) beschriebenen Vorgehensweise bestimmt werden.

Unter dem Begriff "Nicht-Oxid-Keramik" wird Keramik verstanden, die Mischbindungen mit überwiegend kovalenten Bindungen und nur einen geringen Anteil an ionischen Bindungen aufweist, wie beispielsweise Nitride, Carbide oder Boride.

Unter dem Begriff "Hochleistungskeramik" wird technische Keramik verstanden, die nicht zu einem dekorativen Zweck eingesetzt wird, sondern deren Eigenschaften hinsichtlich einer technischen Anwendung optimiert werden, wie beispielsweise Hitzebeständigkeit, elektrische Isolation, Härte und/oder medizinische Anwendungen. Der technischen Anwendung entsprechend kann eine Hochleistungskeramik beispielsweise als Elektrokeramik, Dentalkeramik oder Hochtemperaturkeramik bezeichnet werden. Elektrokeramik kann Bestandteile von Isolatoren, Kondensatoren, Zündkerzen und/oder elektronischen Schaltungen umfassen. Hochtemperaturkeramik kann Heizelemente umfassen und Dentalkeramik kann Zahnersatz, Keramikkronen, Keramikinlays und/oder Keramikverblendungen umfassen.

Unter dem Begriff "Porzellan" wird ein feinkeramisches, porenfreies und wasserdichtes Erzeugnis mit weißem Erscheinungsbild verstanden, dass im Herstellungsverfahren eine unterkühlte Schmelze ausbildet. Die Formmasse von Porzellan umfasst Kaolin, Feldspat und Quarzsand, wobei der Kaolingehalt an aus einem Bereich von 20 Gew.-% bis 80 Gew.-%, insbesondere von 25 Gew.-% bis 70 Gew.-%, ausgewählt ist.

Unter dem Begriff "Trocknen" wird erfindungsgemäß verstanden, dass die Menge an flüssigen Bestandteilen, vorzugsweise Wasser, die in und/oder auf einem Körper enthalten sind, reduziert wird, ohne dass es dabei zu Sintervorgängen kommt. Vorzugsweise erfolgt ein Trocknen beispielsweise eines Formkörpergrünlings, in dem flüssige Bestandteile, vorzugsweise Wasser, enthalten sind, unter Einwirkung von Energie.

Unter dem Begriff "Brennen" wird erfindungsgemäß verstanden, dass die in einem Formkörpergrünling vorliegenden Tonmineralpartikel und/oder keramischen Partikel durch Beaufschlagung mit Energie, vorzugsweise mittels direkter oder indirekter Wärmestrahlung, derart erhitzt werden, dass zumindest die Randbereiche der Tonmineralpartikel und/oder keramischen Partikel zumindest teilweise schmelzen und/oder stoffschlüssige Verbindungen, vorzugsweise in Form von Sinterbrücken, ausgebildet werden. Vorzugsweise erhält der Formkörper durch Brennen seine endgültige Festigkeit, wobei die Festigkeit bei Raumtemperatur, beispielsweise bei 25°C, bestimmt wird.

Unter dem Begriff "Kernmaterial" wird das Material eines Formkörpers verstanden, das um wenigstens 10 %, vorzugsweise wenigstens 20 %, vorzugsweise wenigstens 30 %, der am Betrachtungspunkt vorliegenden Stärke des gebrannten keramischen Formkörpers von der Oberfläche entfernt im Inneren des Formkörpers angeordnet ist, wobei der Formkörper jeweils senkrecht zur Oberfläche des Formkörpers betrachtet wird. Das nicht im Kernmaterial angeordnete Material wird als oberflächennah oder als Randbereich bezeichnet. Typischerweise wird, insbesondere bei einem Dachziegel, unter Randbereich das Material verstanden, das bei Betrachtung senkrecht auf die Oberfläche bis maximal 3 mm, bevorzugt bis maximal 2 mm, weiter bevorzugt bis maximal 1,8 mm, von der Oberfläche entfernt angeordnet ist. Es ist aber auch möglich, dass, insbesondere bei Fassadenplatten, Muffen, Schamottesteinen, Klinkersteinen, Ziegelsteinen oder Schornsteinelementen, unter Randbereich das Material verstanden wird, das bei Betrachtung senkrecht auf die Oberfläche bis maximal 5 mm, vorzugsweise bis maximal 3 mm, vorzugsweise bis maximal 2 mm, von der Oberfläche entfernt angeordnet ist.

Der erfindungsgemäße Formkörper bietet den Vorteil, dass - im Vergleich zu einem konventionell hergestellten Formkörper - der Formkörper eine gleichmäßigere Struktur aufweist. Dies betrifft einerseits insbesondere die Größe der Poren und deren Verteilung innerhalb des Kernmaterials an sich. Andererseits ist auch die Verteilung der Poren über den gesamten Formkörper, also im Randbereich und im Kernbereich, gleichmäßiger. Hierdurch weist der Formkörper weniger inneren Spannungen auf. Diese inneren Spannungen können zu inneren und äußeren Rissen im Formkörper führen, welche die mechanische und strukturelle Stabilität des Formkörpers gefährden und letztendlich zum Zerspringen von diesem oder zu Abplatzungen führen können. Aufgrund der geringeren inneren Spannungen weist ein erfindungsgemäßer Formkörper eine bessere Beständigkeit gegenüber stärkeren Temperaturwechseln auf, wie sie beispielsweise ein Dachziegel durch intensive Sonneneinstrahlung am Tag und Frost in der Nacht ausgesetzt ist.

Bei dem erfindungsgemäßen Verfahren werden elektromagnetische Wellen zum Trocken und/oder Brennen von maximal 300 GHz eingesetzt, wobei sich vorzugsweise der zu erwärmende Formkörper vom Kernmaterial aus erhitzt, wodurch die Temperatur im Kernmaterial stärker ansteigen kann als in oberflächennahen Bereichen. Dies kann sogar so weit gehen, dass, aufgrund der schlechten Wärmeleitfähigkeit des zu erwärmenden Körpers, die Temperatur während der Bestrahlung im Kernmaterial höher ist als im Randbereich.

Dies bietet weiter den Vorteil, dass - im Vergleich zu einem konventionellen Verfahren - innerhalb eines kurzen Zeitraums Formkörpergrünlinge getrocknet und/oder gebrannt, vorzugsweise zumindest teilweise gesintert, werden können. Hierbei ist auch die Verwendung eines kontinuierlichen Durchlaufofens oder im Satzbetrieb möglich. Aufgrund des kurzen Zeitraums, der für die Durchführung des erfindungsgemäßen Verfahrens benötigt wird, ergibt sich ein in Summe energiesparendes und effizientes Verfahren, mit dem gebrannte keramische Formkörper mit großen Durchsatz hergestellt werden können.

Des Weiteren wird bei der Durchführung des erfindungsgemäßen Verfahrens - im Vergleich zu konventionellen Verfahren - wesentlich weniger Stell- und/oder Lagerfläche und/oder weniger Zeit bei gleicher Stückzahlproduktion benötigt. Beispielsweise kann der optionale Schritt des Trocknens in der gleichen Vorrichtung wie der Schritt des Brennens durchgeführt werden, so dass für diesen Verfahrensschritt keine zusätzliche Vorrichtung nötig ist. Damit kann außerdem das Brennen der Formkörpergrünlinge direkt im Anschluss an das Trocknen der Formkörpergrünlinge durchgeführt werden, so dass die Formkörpergrünlinge zwischen den Verfahrensschritten nicht gelagert werden müssen.

Auch ist vorteilhaft an dem erfindungsgemäßen Verfahren, dass im Formkörpergrünling während des Trocknens und/oder Brennens entstehender Wasserdampf durch die noch nicht getrocknete und damit vorzugsweise durchlässigere Oberfläche nach außen entweichen kann. Bei konventionellen Verfahren trocknet der Formkörpergrünling zuerst an der Oberfläche, welche dann weniger durchlässig ist. Da der Formkörpergrünling gleichmäßiger über das Volumen verteilt trocknet, kann auch eine gleichmäßiger auftretende Volumenschrumpfung stattfinden. Dies kann auch bei einer schnelleren Trocknung zu einer geringeren Verformung des Körpers und zu einer geringeren Bildung von Rissen führen. Hierdurch wird zusätzlich der Ausschuss an Formkörpergrünlingen reduziert, die nicht mehr den Qualitätsansprüchen genügen. Des Weiteren weist der erfindungsgemäße gebrannte keramische Formkörper trotz des effizienteren Herstellungsverfahrens keine schlechteren mechanischen Eigenschaften auf, als ein Formkörper, der mittels eines konventionellen Verfahrens hergestellt wird.

Das Verfahren eignet sich besonders gut, ist aber nicht darauf beschränkt, zur Herstellung von, insbesondere dickwandigen, keramischen, vorzugsweise grobkeramischen, Produkten wie Dachziegeln, Fassadenplatten, Muffen, Schornsteinelementen, Schamottesteinen, Ziegelsteinen und Klinkersteinen. Das erfindungsgemäße Verfahren hat sich als besonders bevorzugt zur Herstellung des erfindungsgemäßen Formkörper herausgestellt.

Weitere vorteilhafte Ausgestaltungen der Erfindung sind in den Unteransprüchen angegeben.

Der erfindungsgemäße gebrannte keramische Formkörper, insbesondere das Kernmaterial und der Randbereich, ist/sind im Wesentlichen aus Grobkeramik.

Der gebrannte keramische Formkörper, insbesondere das Kernmaterial und der Kernbereich, ist aus gebranntem Ton und/oder gebranntem Lehm und/oder Schamotte sowie optional Zuschlägen gebildet.

Insbesondere beträgt der Abstand von einer einem Betrachter zugewandten Oberfläche zu einer gegenüberliegenden Oberfläche des Formkörpers von 6 mm bis 365 mm, bevorzugt von 7 mm bis 50 mm, weiter bevorzugt 8 mm bis 30 mm, bei senkrechter Betrachtung auf die von einem gebrannten keramischen Formkörper aufgespannte Frontalebene. Erfindungsgemäß kann unter dem vorstehenden Abstand die Stärke oder Dicke des Formkörpers verstanden werden.

Es ist weiter möglich, dass eine laterale Ausdehnung des gebrannten keramischen Formkörpers in zumindest eine Richtung entlang der vom gebrannten keramischen Formkörper aufgespannten Frontalebene wenigstens 11 cm beträgt, insbesondere einen Wert ausgewählt aus einem Bereich von 11 cm bis 250 cm beträgt. Mit anderen Worten kann der gebrannte keramische Formkörper, bei senkrechter Betrachtung auf die von dem gebrannten keramischen Formkörper aufgespannte Frontalebene, Abmessungen von wenigstens 11 cm x 15 cm, vorzugsweise Abmessungen ausgewählt aus einem Bereich von 11 cm x 15 cm bis 250 cm x 250 cm, bevorzugt von 11 cm x 15 cm bis 40 cm x 60 cm, aufweisen.

Weiter ist der erfindungsgemäße gebrannte keramische Formkörper vorzugsweise ein Dachziegel, eine Fassadenplatte, eine Muffe, ein Schamottestein, ein Klinkerstein, ein Ziegelstein oder ein Schornsteinelement.

Der Dachziegel kann beispielsweise ein Hohlpfannenziegel, Biberschwanzziegel, Doppelmuldenfalzziegel, Falzziegel, Reformziegel, Flachdachziegel, Mönchziegel, Nonnenziegel, Krempziegel, etc. sein.

Vorzugsweise umfasst der gebrannte keramische Formkörper wenigstens einen Mikrowellen-Suszeptor, der vorzugsweise aus der Gruppe, die aus Carbiden, Nitriden, Boriden, Graphit, Siliciden, und Mischungen davon besteht, ausgewählt ist Bevorzugt umfasst der Mikrowellen-Suszeptor SiC, Si₃N₄, oder Mischungen davon, weiter bevorzugt SiC, weiter bevorzugt alpha-SiC, oder besteht daraus. Bevorzugt ist der Mikrowellen-Suszeptor, vorzugweise in Form von diskreten Suszeptor-Partikeln, homogen oder heterogen im gebrannten keramischen Formkörper verteilt angeordnet. Beispielsweise kann der Mikrowellen-Suszeptor aus einem oxidischen anorganischen Material bestehen, dass dotiert ist, bevorzugt mit den vorstehenden Materialien dotiert ist, wobei die Dotierung natürlichen Ursprung sein kann oder synthetisch hinzugefügt wurde.

Bei einer bevorzugten Ausführung ist der wenigstens eine Mikrowellen-Suszeptor in einem Teilbereich des Randbereichs, insbesondere in oder an zumindest einem Teilbereich wenigstens einer Oberfläche des gebrannten keramischen Formkörpers angeordnet. Alternativ oder kumulativ kann der Mikrowellen-Suszeptor auch bevorzugt im Kernmaterial angeordnet sein.

Unter dem Begriff "Mikrowellen-Suszeptor" wird erfindungsgemäß ein, bevorzugt bei Standardbedingungen (Temperatur: 25 °C, Druck: 1013 mbar) festes, anorganisches Material verstanden, das elektromagnetische Strahlung mit einer Frequenz von maximal 300 GHz (Wellenlänge: ca. 1 mm) absorbiert und diese zumindest teilweise in Wärmestrahlung umwandelt.

Besonders vorteilhaft bei der Verwendung von SiC als Mikrowellen-Suszeptor, vorzugsweise von alpha-SiC, sind insbesondere dessen geringer Kostenfaktor, hohe Temperaturbeständigkeit und gute Temperaturwechselbeständigkeit. SiC weist des Weiteren äußerst vorteilhaft einen hohen Wirkungsgrad bei der Umwandlung von Mikrowellen in Wärmestrahlung auf.

Der Vorteil von Mikrowellen-Suszeptor-Partikeln zeigt sich insbesondere bei der Herstellung des erfinderischen Formkörpers. So können geeignete Mikrowellen-Suszeptor-Partikel beispielsweise in einem Formkörpergrünling, welcher ohne Mikrowellen-Suszeptor-Partikel bei niedrigen Temperaturen, beispielsweise Raumtemperatur, elektromagnetische Strahlung nur geringfügig absorbiert, nach der Einwirkung von elektromagnetischer Strahlung, beispielsweise Mikrowellenstrahlung, Bereiche mit erhöhter Temperatur im Kernmaterial bereitstellen. Die Mikrowellen-Suszeptor-Partikel absorbieren elektromagnetische Strahlung und wandeln die elektromagnetische Strahlung zumindest teilweise in Wärme um. Der Zeitraum für das Aufheizen des Formkörpergrünlings auf Temperaturen, bei denen das verwendete Material des Formkörpergrünlings von sich aus elektromagnetische Strahlung mit einer Frequenz von maximal 300 GHz in ausreichender Menge absorbiert, kann dadurch verkürzt werden und der CO₂-Fußabdruck weiter reduziert werden.

Optional weist der erfindungsgemäße gebrannte keramische Formkörper auf wenigstens einem Teilbereich wenigstens einer Oberfläche wenigstens eine Oberflächenbeschichtung auf. Die Oberflächenbeschichtung kann eine oder mehrere Schichten umfassen. Bei einer bevorzugten Ausführungsform des erfindungsgemäßen gebrannten keramischen Formkörpers ist die Oberflächenbeschichtung auf der gesamten Oberfläche des gebrannten keramischen Formkörpers angeordnet. Bei einer alternativen Ausführungsform ist die Oberflächenbeschichtung lediglich auf einem Teilbereich wenigstens einer Oberfläche des gebrannten keramischen Formkörpers angeordnet, die und/oder der beispielsweise bei der späteren Verwendung dem Sonnenlicht, dem Niederschlag und/oder den Abgasen in der Luft ausgesetzt ist/sind.

Die Oberflächenbeschichtung kann getrocknet und/oder gehärtet und/oder gebrannt ausgebildet sein.

Die wenigstens eine Oberflächenbeschichtung weist bevorzugt eine Trockenschichtdicke aus einem Bereich von 0,1 nm bis 200 nm, vorzugsweise von 40 nm bis 150 nm, in wenigstens einem Teilbereich auf.

Die Oberflächenbeschichtung kann beispielsweise wenigstens ein organisches oder anorganisches Bindemittel aufweisen. Vorzugsweise wird das anorganische Bindemittel aus der Gruppe, bestehend aus Wasserglas, Kieselsäure, deren Derivaten und Mischungen davon, ausgewählt.

Unter dem Begriff "Bindemittel" wird erfindungsgemäß ein Stoff verstanden, der vorzugsweise an der Phasengrenze anderer Stoffe chemische Bindungen herstellt und/oder begünstigt und/oder zumindest physikalische Effekte wie beispielsweise Kohäsion, Adsorption, Adhäsion und/oder Reibung auslöst und/oder vergrößert. In der Regel verbinden Bindemittel andere Stoffe, indem sie beispielsweise diese aufnehmen, zusammenhalten, vernetzen und/oder verkleben und/oder sich an diesen anlagern.

Bei einer bevorzugten Ausführungsform des erfindungsgemäßen gebrannten keramischen Formkörpers ist die wenigstens eine Oberflächenbeschichtung in Form einer Engobe und/oder einer Glasur ausgebildet. Beispielsweise kann eine Engobe und/oder Glasur in Kontakt mit wenigstens einem Teilbereich wenigstens einer Oberfläche des erfindungsgemäßen gebrannten keramischen Formkörpers angeordnet sein.

Eine Glasur ist eine glasartige, vorzugsweise geschlossene, Oberflächenschicht. Vorzugsweise weist eine Glasur eine Trockenschichtdicke aus einem Bereich von 5 µm bis 500 µm, weiter bevorzugt von 5 µm bis 100 µm, auf, die zumindest auf einem Teilbereich wenigstens einer Oberfläche des erfindungsgemäßen keramischen Formkörpers angeordnet ist. Die Glasur gleicht vorzugsweise die Rauigkeit oder gegebenenfalls vorhandene Poren der Oberfläche des Formkörpers aus. Bei einer Ausführungsform ist die Glasur wasserundurchlässig, jedoch vorzugsweise aufgrund einer Mikroporosität für Wasserdampf noch durchlässig, so dass die ursprünglichen Eigenschaften des erfindungsgemäßen gebrannten keramischen, Formkörpers, insbesondere Dachziegel, Schornsteinelement, Schamottestein, Muffe, Ziegelstein, Klinkerstein oder Fassadenelement, hinsichtlich der Wasserdampfdurchlässigkeit nicht eingeschränkt sind. Vorzugweise erfüllt die Glasur auch Dekorzwecke und kann in Farbe, Transparenz, Opazität und/oder Glanz variieren.

Die Glasur kann eine, bevorzugt amorph, erstarrte SiO₂-Schmelze aufweisen, die weiter bevorzugt schmelzpunkterniedrigende Oxide, wie Li₂O, Na₂O, K₂O, B₂O₃, CaO, BaO, Bi₂O₃, und/oder ZnO, aufweist. Die Glasur kann darüber hinaus wenigstens ein Trübungsmittel umfassen, wobei geeignete Trübungsmittel beispielsweise hochschmelzende Oxide, wie z. B. Al₂O₃, SnO₂, ZrO₂, As₂O₃, As₂O₅, CeO₂, WO₃, V₂O₃, und/oder V₂O₅ sind, welche vorzugsweise nicht schmelzen und somit weiter bevorzugt gleichmäßig als Partikel in der Glasur, vorzugsweise nach dem Aushärten, verteilt sind. Als Farbpigmente sind vorzugsweise farbige Metalloxide, wie die CoO, Co₂O₃, Co₃O₄, NiO, Ni₂O₃, CuO, Cr₂O₃, UO₂, UO₃, Sb₂O₃, Sb₂O₅, MnO₂, TiO₂, FeO, Fe₂O₃, Fe₃O₄, MgO, BeO, SrO, SeOs, Er₂O₃, und/oder Sb₂O₃, oder bei Giftigkeit bereits verkapselte Metalloxide, einzeln oder in einem Mischungsverhältnis enthalten, die eine gewünschte Farbe aufweisen.

Die Engobe von engobierten Formkörpern ist gebildet aus einer Mischung, die Ton und/oder Kaolin und/oder Bentonit aus einem Bereich von 60 Gew.-% bis 100 Gew.-% und gegebenenfalls eine Glasfritte aus einem Bereich von 0 Gew.-% bis 40 Gew.-% aufweist. Die vorstehenden Angaben sind bezogen auf das Gesamtgewicht der Engobe.

Bei einer bevorzugten Ausführungsform weist die Oberflächenbeschichtung selbstreinigende Eigenschaften und/oder luftreinigende Eigenschaften auf.

Unter dem Begriff "selbstreinigende Oberflächenbeschichtung" wird erfindungsgemäß verstanden, dass sich auf der Oberflächenbeschichtung ablagernde Schimmel, Pilzhüfen, Pflanzenwuchs, beispielsweise Moos und/oder Algen, bakterielle Verunreinigungen und/oder Verunreinigungen aus Industrieanlagen photochemisch abgebaut und entfernt werden. Die selbstreinigende Oberflächenbeschichtung oxidiert die genannten Stoffe bzw. Verunreinigungen, wodurch diese ein vermindertes Haftungsvermögen auf der entsprechend ausgestalteten Oberflächenbeschichtung aufweisen und bevorzugt bei Beregnung bzw. bei Berieselung mit Wasser leicht von der beschichteten Oberfläche des gebrannten keramischen Formkörpers abgespült werden.

Unter dem Begriff "luftreinigende Oberflächenbeschichtung" wird erfindungsgemäß verstanden, dass auf der Oberflächenbeschichtung Luftschadstoffe, beispielsweise wie Stickoxide, Schwefeloxide und andere oxidierbare Gase, photochemisch abgebaut und/oder entfernt werden. Insbesondere oxidiert die luftreinigende Oberflächenbeschichtung die Luftschadstoffe. Die gebildeten wasserlöslichen Salze können bevorzugt bei Beregnung bzw. bei Berieselung mit Wasser leicht von der beschichteten Oberfläche des gebrannten keramischen Formkörpers abgespült werden.

Vorteilhafterweise weist der gebrannte keramische Formkörper ein spezifisches Porenvolumen von höchstens 110 mm³/g, bevorzugt von höchstens 102 mm³/g, auf. Insbesondere entspricht das vorgenannte spezifische Porenvolumen dem spezifischen Porenvolumen des Kernmaterials des gebrannten keramischen Formkörpers. Vorteilhafterweise weist gebrannte keramische Formkörper eine mittlere offene Porosität von höchstens 23,5 %, bevorzugt von höchstens 22 %, auf.

Erfindungsgemäß ist das spezifische Porenvolumen des gebrannten keramischen Formkörpers im Kernmaterial um nicht mehr als 8 % größer, vorzugsweise um nicht mehr als 6 % größer, als das spezifische Porenvolumen des gebrannten keramischen Formkörpers im Randbereich. Mit anderen Worten ist es möglich, dass das Verhältnis des spezifischen Porenvolumens des Randbereichs zu dem spezifischen Porenvolumens des Kernmaterials des gebrannten keramischen Formkörpers größer ist als 0,925, vorzugsweise größer ist als 0,945. Bevorzugt beträgt das Verhältnis des spezifischen Porenvolumens des Randbereichs zu dem spezifischen Porenvolumens des Kernmaterials des gebrannten keramischen Formkörpers einen Wert ausgewählt aus dem Bereich von 0,925 bis 1,100, weiter bevorzugt von 0,945 bis 1,000.

Vorzugsweise weist das Kernmaterial eine mittlere Porenlänge von maximal 125%, vorzugsweise von maximal 120 %, weiter bevorzugt von maximal 115 %, der Porenlänge des Randbereichs auf. Weiter kann das Kernmaterial eine mittlere Porenbreite von maximal 120 %, vorzugsweise von maximal 110 %, weiter bevorzugt von maximal 115 %, der Porenbreite des Randbereichs aufweisen. Bei gebrannten keramischen Formkörpern hergestellt durch ein konventionelles Verfahren, weist das Kernmaterial mittlere Porenlängen und Porenbreiten von mehr als 125 % des Randbereichs auf.

Unter "Porenlänge" wird erfindungsgemäß die größtmögliche geradlinige Strecke von einer Porenwand zu einer gegenüberliebenden weiteren Porenwand innerhalb einer Pore verstanden. Unter "Porenbreite" wird erfindungsgemäß die größtmögliche geradlinige Strecke von einer Porenwand zu einer gegenüberliebenden Porenwand innerhalb einer Pore verstanden, wobei die Porenbreite im 90° Winkel zur Porenlänge bestimmt wird.

Das spezifische Porenvolumen wird jeweils bestimmt durch eine Methode nach DIN ISO 15901-1:2019-03 (Englischer Titel: "Evaluation of pore size distribution and porosity of solid materials by mercury porosimetry and gas adsorption - Part 1: Mercury porosimetry (ISO 15901-1:2016)", Deutscher Titel: "Bewertung der Porengrößenverteilung und Porosität von Feststoffen mittels Quecksilberporosimetrie und Gasadsorption - Teil 1: Quecksilberporosimetrie (ISO 15901-1:2016)", Ausgabedatum: 2019-03)und die offene Porosität jeweils durch einer Methode nach DIN EN 993-1:2019-03 (Englischer Titel: "Methods of test for dense shaped refractory products - Part 1: Determination of bulk density, apparent porosity and true porosity; German version EN 993-1:2018", Deutscher Titel: "Prüfverfahren für dichte geformte feuerfeste Erzeugnisse - Teil 1: Bestimmung der Rohdichte, offenen Porosität und Gesamtporosität; Deutsche Fassung EN 993-1:2018", Ausgabedatum: 2019-03), jeweils unter Verwendung eines Quecksilberporosimeters.

Hierzu wird zuerst der Probenbereich grob ausgesägt und das benötigte Probenstück herausgeschlagen. Anschließend wird das Probenstück in ein Probengefäß eines Quecksilberporosimeters überführt. Hierbei wurde ein Quecksilber-Hochdruckporosimeters PASCAL 1401440 (Thermo Fisher SCIENTIFIC) verwendet. Die Messung besteht aus zwei Messchritten. Während dem ersten Messchritt wird das Probengefäß zuerst unter Vakuum mit Quecksilber befüllt und von bis zu 4 bar mit Quecksilber befüllt. Während dem zweiten Messchritt wird in einer Hochdruckeinheit des Porosimeters der Druck von Umgebungsdruck bis 4000 bar gesteigert. Ermittelt wird jeweils das Quecksilbervolumen das in abhängig des angelegten Drucks in die Probe eingebracht wird, woraus sich die spezifische Porenvolumen und die offene Porosität ableiten lassen. Zur Auswertung werden die Ergebnisse des ersten und des zweiten Messchrittes zusammengeführt.

Gebrannte keramische Formkörper hergestellt durch konventionelle Verfahren, weisen in der Regel höhere Porenvolumina auf, wobei sich ferner die Porenvolumina zwischen dem Kernmaterial und dem Randbereich stärker voneinander unterscheiden.

Insbesondere kann der erfindungsgemäße gebrannte Formkörper mit dem erfindungsgemäßen Verfahren gemäß Anspruch 8 bereitgestellt werden. Bevorzugte Ausführungsformen des erfindungsgemäßen Verfahrens sind im Folgenden aufgeführt.

In Schritt (a) des erfindungsgemäßen Verfahrens wird zunächst wenigstens ein Formkörpergrünling bereitgestellt, wobei der Formkörpergrünling formstabil ist und auf ungebranntem Lehm und/oder ungebranntem Ton basiert.

Vorzugsweise weist ein für das erfindungsgemäße Verfahren geeigneter Formkörpergrünling, insbesondere für die Herstellung eines gebrannten keramischen Formkörpers zur Verwendung als Dachziegel, folgende Bestandteile auf, die so ausgewählt werden, dass sie in Summe 100 Gew.-%, jeweils bezogen auf das Trockengewicht des Formkörpergrünlings, ergeben:

| | |
|---|---|
| Lehm: | 50 Gew.-% - 95 Gew.-% |
| Ton: | 5 Gew.-% - 50 Gew.-% |
| Zuschläge: | 0 Gew.-% - 5 Gew.-% |

### Weiter bevorzugt:

| | |
|---|---|
| Lehm: | 60 Gew.-% - 90 Gew.-% |
| Ton: | 10 Gew.-% - 40 Gew.-% |
| Zuschläge: | 0 Gew.-% - 1,5 Gew.-% |

### Noch weiter bevorzugt:

| | |
|---|---|
| Lehm: | 70 Gew.-% - 85 Gew.-% |
| Ton: | 15 Gew.-% - 30 Gew.-% |
| Zuschläge: | 0 Gew.-% - 0,5 Gew.-% |

Unter dem Begriff "Zuschläge" werden beispielsweise Füllstoffe, Magerungsmittel, Flussmittel, Härter, Farbmittel, Porenbildner, Salzbinder oder Kombinationen davon verstanden. Insbesondere werden unter Zuschlägen Materialien verstanden, die lediglich einem geringen Anteil beispielsweise bis maximal 15 Gew.-%, bevorzugt bis maximal 10 Gew.-%, weiter bevorzugt bis maximal 8 Gew.-%, des Trockengewichts eines Formkörpergrünlings ausmachen, um die jeweilige Funktion zu erfüllen. Vorzugsweise verleiht ein Füllstoff dem Formkörpergrünling Volumen und/oder Stabilität. Ein Magerungsmittel verringert vorzugsweise den Schwund beim Brennen und reduziert den Anteil von teureren Bestandteilen.

Beispielsweise kann Sand als Zuschlag, insbesondere als Magerungsmittel, zugeben werden. Vorzugsweise ist vorgenannter Sand Quarzsand und/oder Buntsandstein. Ein Härter kann dem Werkstoff eine höhere mechanische Festigkeit verleihen. Ein Flussmittel ist ein keramisches Material, welches die Temperatur, welche benötigt wird, damit eine Schmelzphase vorliegt, erniedrigt. Ein Salzbinder verringert das Ausblühen von Salzen, also eine Versalzung der Formkörperoberfläche. Beispielsweise kann als Salzbinder Bariumcarbonat zugegeben werden. Ein Porenbildner ist ein organisches Material, welches beim Brennvorgang vollständig oxidiert, so dass dieses im gebrannten Formkörper nicht mehr vorhanden ist und somit Hohlräume ausgebildet worden sind.

Ein für das erfindungsgemäße Verfahren geeigneter Formkörpergrünling wird vorzugsweise durch ein Formgebungsverfahren, zum Beispiel in einem Trocken- oder Halbtrocken-Pressverfahren, mit gewünschter Form bereitgestellt. Vorzugsweise werden Form und Struktur des Formkörpergrünlings durch die Härte der für diese Art von Formgebungsverfahren eingesetzten bildsamen Komponente und/oder durch die Nachgiebigkeit einer die Oberfläche formenden Formwand bestimmt.

In Formgebungsverfahren wird eine lehm- und/oder tonhaltige Masse, nachfolgend als Formmasse bezeichnet, vermischt und in eine Formhöhlung eingebracht.

Die angestrebte Konsistenz der verwendeten Formmasse wird abhängig vom verwendeten Formgebungsverfahren eingestellt. Schwankungen in der Konsistenz der Formmasse sind insofern unkritisch, da der Druckkontakt mit der formgebenden Oberfläche so lange aufrechterhalten werden kann, bis eine hinreichende Verfestigung eintritt. Die Verfestigung tritt durch eine Abfuhr von Feuchtigkeit und/oder durch ein Wirksamwerden wenigstens eines Bestandteils der Formmasse als Bindemittel aufgrund des angelegten Druckes und/oder aufgrund einer chemischen Reaktion ein. In Abhängigkeit des verwendeten Formgebungsverfahren kann die Konsistenz der verwendeten Formmasse ausgewählt sein aus einem weitgehend flüssigen Zustand, der auch als Schlicker bezeichnet wird, bis zu einem gerade noch bildsamen Zustand. Die Formmasse weist einen Zustand oder eine Konsistenz auf, der/die das Einbringen der Formmasse in die Formhöhlung und die Weiterleitung des angelegten Druckes erlaubt.

Der Formkörpergrünling kann beispielsweise mittels Trocken- und Halbtrocken-Pressverfahren als Formgebungsverfahren bereitgestellt werden. Hierbei weisen die dort verwendeten Formmassen in der Regel einen geringen Feuchtigkeitsgehalt auf. Trocken-und Halbtrocken-Pressverfahren werden mit relativ hohen Drücken, beispielsweise bis zu 1000 bar und mehr, vorwiegend als sogenanntes isostatisches Pressen ausgeführt. Hierbei kommt eine Pressform zum Einsatz, die eine bewegliche Formwand in Gestalt einer Membran aufweist, während die übrige Wand der Formhöhlung in der Regel aus Metall oder Kunststoff besteht und entsprechend glatt ist. Die Herstellung von keramischen Kaminrohren kann beispielsweise mit diesem Verfahren und mit einem die Innenwandung formenden Metalldorn oder -kern erfolgen.

Auch kann der Formkörpergrünling mittels eines Pressverfahrens als Formgebungsverfahren bereitgestellt werden. Hierbei wird von einer Schnecke oder dergleichen ein Spritz- oder Fülldruck ausgeübt. Beispielsweise werden bei den Formgebungsverfahren zur Herstellung von Pressdachziegeln Gipsformen verwendet. Zur Herstellung von Flachziegeln werden bei den Formgebungsverfahren Strangpressen eingesetzt.

Ein in Schritt (a) des erfindungsgemäßen Verfahrens bereitgestellter Formkörpergrünling weist vorzugsweise einen maximalen Restfeuchtegehalt von maximal 30 Gew.-%, vorzugsweise von maximal 20 Gew.-%, weiter bevorzugt von maximal 10 Gew.-%, weiter bevorzugt von maximal 8 Gew.-%, jeweils bezogen auf das Gesamtgewicht des in Schritt (a) bereitgestellten Formkörpergrünlings, auf.

Bei einer bevorzugten Ausführung der Erfindung weist der bereitgestellte Formkörpergrünling wenigstens einen Mikrowellen-Suszeptor, vorzugsweise in Form von Mikrowellen-Suszeptor-Partikeln, auf.

Geeignete Mikrowellen-Suszeptor-Partikel können in einem Formkörpergrünling, welcher ohne Mikrowellen-Suszeptor-Partikel bei niedrigen Temperaturen, beispielsweise Raumtemperatur, elektromagnetische Strahlung nur geringfügig absorbiert, nach der Einwirkung von elektromagnetischer Strahlung, beispielsweise Mikrowellenstrahlung, Bereiche mit erhöhter Temperatur im Kernmaterial bereitstellen. Die Mikrowellen-Suszeptor-Partikel absorbieren, wie bereits weiter oben beschrieben, elektromagnetische Strahlung und können die elektromagnetische Strahlung zumindest teilweise in Wärmestrahlung umwandeln. Der Zeitraum für das Aufheizen des Formkörpergrünlings auf Temperaturen, bei denen das verwendete Material des Formkörpergrünlings von sich aus elektromagnetische Strahlung mit einer Frequenz von maximal 300 GHz in ausreichender Menge absorbiert, kann dadurch verkürzt werden.

Ein Trocknen und/oder Brennen eines Formkörpergrünlings kann in Gegenwart einer ausreichenden Menge an Mikrowellen-Suszeptoren, beispielsweise an Mikrowellen-Suszeptor-Partikeln, die beispielsweise in dem Formkörpergrünling vorhanden sind und/oder mit zumindest einer Oberfläche des Formkörpergrünlings in Kontakt stehen, in einem kürzeren Zeitraum durchgeführt werden.

Bei einer bevorzugten Ausführungsform ist wenigstens ein Mikrowellen-Suszeptor, beispielsweise in Form von diskreten Suszeptor-Partikeln, homogen im Formkörpergrünling verteilt. Dadurch wird der Formkörpergrünling, beispielsweise nach Einwirkung von elektromagnetischer Strahlung mit einer Frequenz von maximal 300 GHz, vorzugsweise homogen über das Formkörpervolumen erwärmt.

Beispielsweise kann eine homogene Verteilung des wenigstens einen Mikrowellen-Suszeptors, beispielsweise von diskreten Mikrowellen-Suszeptor-Partikeln, im Formkörpergrünling durch Mischen unter Erhalt einer homogenen Formmasse von geeigneten Ausgangsmaterialen, beispielsweise diskreten Mikrowellen-Suszeptor-Partikeln und den zuvor genannten Bestandteilen des Formkörpergrünlings, nach im Stand der Technik bekannten Verfahren vor der Bereitstellung des Formkörpergrünlings erreicht werden.

Bei einer alternativen Ausführungsform ist der Mikrowellen-Suszeptor heterogen im Formkörpergrünling verteilt. Beispielsweise kann der Suszeptor, vorzugsweise in Form von diskreten Mikrowellen-Suszeptor-Partikeln, bereichsweise im Formkörpergrünling angereichert vorliegen. Insbesondere bei Formkörpergrünlingen, die eine größere Stärke aufweisen, kann es von Vorteil sein, wenn wenigstens ein geeigneter Mikrowellen-Suszeptor, vorzugsweise in Form von diskreten Mikrowellen-Suszeptor-Partikeln, in den Randbereich des Formkörpergrünlings eingebracht wird und/oder im Kernmaterial des Formkörpergrünlings angeordnet wird. Damit kann auch bei mangelnder Eindringtiefe der elektromagnetischen Strahlung mit einer Frequenz von maximal 300 GHz trotzdem von dem positiven Effekt des Mikrowellen-Suszeptors profitiert wird.

Eine heterogene Verteilung des wenigstens einen Mikrowellen-Suszeptors, beispielsweise von diskreten Mikrowellen-Suszeptor-Partikeln, kann im Formkörpergrünling nach im Stand der Technik bekannten Verfahren vor, während und/oder nach der Bereitstellung des Formkörpergrünlings erreicht werden.

Werden beispielsweise Mikrowellen-Suszeptor-Partikel im Wesentlichen im Kernmaterial angeordnet, so hat dies den Vorteil, dass, insbesondere bei Formkörpergrünlingen mit einer größeren Stärke, nach Beaufschlagung mit einer elektromagnetischen Strahlung mit einer Frequenz von maximal 300 GHz die vom Mikrowellen-Suszeptor umgewandelte Wärme vorzugsweise fokussiert an das umgebende Kernmaterial des Formkörpergrünlings abgegeben wird. Damit kann auch im Kernmaterial trotz einer vorherigen Abschwächung der elektromagnetischen Strahlung von dem positiven Effekt des Mikrowellen-Suszeptors profitiert werden.

Vorzugsweise wird der wenigstens eine Mikrowellen-Suszeptor, der vorzugsweise in Form von diskreten Mikrowellen-Suszeptor-Partikeln vorliegt, ausgewählt aus wenigstens einem anorganisches Material, das weiter bevorzugt aus der Gruppe, die aus Carbiden, Nitriden, Boriden, Graphit, Siliciden, und Mischungen davon, vorzugsweise Carbiden, Nitriden, und Mischungen davon, besteht, ausgewählt wird.

Weiter bevorzugt wird der wenigstens eine Mikrowellen-Suszeptor wenigstens aus einem anorganischen Material, das aus der Gruppe, die aus SiC, MoSi, Graphit, Si₃N₄, und Mischungen davon, vorzugsweise SiC, Si₃N₄, und Mischungen davon, besteht, ausgewählt. Weiter bevorzugt wird als Material für den Mikrowellen-Suszeptor SiC, das alpha-SiC umfasst, vorzugsweise aus alpha-SiC besteht, ausgewählt.

Bei einer bevorzugten Ausführungsform der Erfindung weist der wenigstens eine Mikrowellen-Suszeptor in dem in Schritt (a) bereitgestellten Formkörpergrünling einen Anteil von maximal 10 Gew.-%, vorzugsweise aus einem Bereich von mehr als 0 Gew.-% bis 7 Gew.-%, weiter bevorzugt von 0,1 Gew.-% bis 5 Gew.-%, weiter bevorzugt von 0,25 Gew.-% bis 4 Gew.-%, weiter bevorzugt von 0,5 Gew.-% bis 3 Gew.-%, jeweils bezogen auf das Trockengewicht des in Schritt (a) bereitgestellten Formkörpergrünlings, auf. Weiter weist der Mikrowellen-Suszeptor einen mittleren volumenäquivalenten Kugeldurchmesser, x_{50, 3}, von maximal 109 µm, vorzugsweise von maximal 82 µm, weiter bevorzugt von maximal 69 µm, weiter bevorzugt aus einem Bereich von 1,2 µm bis 109 µm, weiter bevorzugt aus einem Bereich von 12 µm bis 82 µm, weiter bevorzugt aus einem Bereich von 22 µm bis 69 µm, auf. Der mittlere volumenäquivalente Kugeldurchmesser, x_{50, 3}, kann ebenfalls durch Laserbeugung, beispielsweise gemäß dem in der ISO 13320:2020-01 ("Particle size analysis - Laser diffraction methods", Deutscher Titel: "Partikelgrößenanalyse - Partikelmessung durch Laserlichtbeugung", Veröffentlichungsdatum: 2020-01) beschriebenen Vorgehensweise bestimmt werden.

Durch die vorgenannten bevorzugten Gewichtsanteile und mittleren volumenäquivalenten Kugeldurchmesser des Mikrowellen-Suszeptors wird vorzugsweise gewährleistet, dass im Formkörpergrünling eine geeignete Menge an Mikrowellen-Suszeptor-Partikeln enthalten ist, die wie oben beschrieben homogen oder heterogen im Formkörpergrünling angeordnet sein können. Hierdurch kann eine sehr gute Wärmeverteilung während des erfindungsgemäßen Verfahrens über den gesamten Formkörpergrünling gewährleistest werden. Weiter werden die bevorzugten mechanischen Eigenschaften des, optional getrockneten, Formkörpergrünlings und/oder gebrannten keramischen Formkörpers durch die enthaltenen Mikrowellen-Suszeptor-Partikel nicht negativ beeinflusst.

Bei einer bevorzugten Ausführungsform des erfindungsgemäßen Verfahrens wird wenigstens ein Formkörpergrünling auf einem Trägerelement bereitgestellt. Dieses Trägerelement kann derart geformt sein, dass es Bestandteil eines Regals, beispielsweise ein Regalboden, ist. Dies hat den Vorteil, dass bei einer Handhabung des noch nicht mit endgültiger Festigkeit versehenen Formkörpergrünlings eine Beschädigung des Formkörpergrünlings zumindest verringert, vorzugsweise vermieden, werden kann. Des Weiteren können mehrere Trägerelemente während des Transports oder während dem Verfahren übereinander angeordnet werden, beispielsweise in Form eines Regals.

Bei einer bevorzugten Ausführungsform des erfindungsgemäßen Verfahrens weist das wenigstens eine Trägerelement zumindest teilweise wenigstens ein Abstandselement und/oder eine Aussparung auf. Das wenigstens eine Abstandselement und/oder die wenigstens eine Aussparung kann zumindest teilweise wenigstens als Rille, Riffel, Rippe, Nut, Öffnung, vorzugsweise als Längsschlitz und/oder als Bohrung, und/oder ähnliche Struktur ausgebildet sein. Dies hat den Vorteil, dass der Formkörpergrünling nicht vollflächig mit dem Trägerelement in Kontakt steht, so dass Wasserdampf besser aus dem Formkörpergrünling abgeführt werden kann.

Des Weiteren wird bei einer nicht-vollflächigen Anordnung des wenigstens einen Formkörpergrünlings auf dem Trägerelement ein verbessertes Eindringen elektromagnetischer Strahlung mit einer Frequenz von maximal 300 GHz in den Formkörpergrünling ermöglicht. Aufgrund der in das wenigstens eine Trägerelement eingebrachten Aussparungen, beispielsweise in Form von wenigsten einem Längsschlitz und/oder einer Bohrung, wird die die elektromagnetische Strahlung mit einer Frequenz von maximal 300 GHz nicht wesentlich abgeschirmt oder abgeschwächt.

Weiter ist es auch möglich, dass das wenigstens eine Trägerelement auf dem der Formkörpergrünling bereitgestellt wird, aus anorganischem Material besteht, welches vorzugsweise zumindest teilweise Mikrowellen-Suszeptoren umfasst oder daraus besteht. Dadurch wird auch bei dem wenigstens einen Trägerelement bei Einstrahlung von elektromagnetischer Strahlung mit einer Frequenz von maximal 300 GHz diese in Wärmestrahlung umgewandelt. Vorteilhafterweise wird hierdurch das Aufheizen des Formkörpergrünlings unterstützt und das erfindungsgemäße Verfahren effizienter gestaltet. Hierdurch wird der CO₂-Fussabdruck des Verfahrens bzw. des damit bereitgestellten Formkörpers weiter reduziert.

In Schritt (b) des erfindungsgemäßen Verfahrens wird optional der in Schritt (a) bereitgestellte Formkörpergrünling zumindest teilweise getrocknet.

Erfindungsgemäß wird unter dem Begriff "teilweise getrocknet" ein Restfeuchtegehalt des Formkörpergrünlings von maximal 5 Gew.-%, bezogen auf das Gesamtgewicht des zumindest teilweise getrockneten Formkörpergrünlings, verstanden. Weiter wird erfindungsgemäß unter dem Begriff "getrocknet" ein Restfeuchtegehalt des Formkörpergrünlings von maximal 3,5 Gew.-% verstanden. Der Restfeuchtegehalt ist jeweils bezogen auf das Gesamtgewicht des vorliegenden teilweise getrockneten oder getrockneten Formkörpergrünlings.

Der Restfeuchtegehalt kann durch Austrocknung bis zur Gewichtskonstanz, beispielsweise mittels Trockenschrank, vorzugsweise bei einer Temperatur von wenigstens 110 °C, bestimmt werden.

Weiter bevorzugt wird ein Trocknen vorzugsweise in einem Temperaturbereich durchgeführt, bei dem der Formkörpergrünling am Ende von Schritt (b) eine Oberflächentemperatur aus einem Bereich von 80 °C bis 220 °C, vorzugsweise von 120 °C bis 180 °C, aufweist.

Das Trocknen in Schritt (b) erfolgt vorzugsweise über einen Zeitraum von wenigstens 30min, weiter bevorzugt aus einem Bereich von 30 min bis 360 min, noch weiter bevorzugt von 30 min bis 120 min. Dadurch wird vorzugsweise ein über das Formkörpervolumen homogener Restfeuchtegehalt in dem nach Schritt (b) erhaltenen zumindest teilweise getrockneten Formkörpergrünling gewährleistet.

Bei einer bevorzugten Ausführungsform des erfindungsgemäßen Verfahrens wird in Schritt (b) elektromagnetische Strahlung mit einer Frequenz von maximal 300 GHz (Wellenlänge: ca. 1 mm) verwendet. Weiter bevorzugt wird elektromagnetische Strahlung mit einer Frequenz aus einem Bereich von etwa 300 MHz (Wellenlänge: ca. 1000 mm) bis etwa 300 GHz (Wellenlänge: ca.1 mm), vorzugsweise mit einer Frequenz von etwa 600 MHz (Wellenlänge: ca. 500 mm) bis etwa 6000 MHz (Wellenlänge: ca. 50 mm), vorzugsweise mit einer Frequenz von etwa 730 MHz (Wellenlänge: ca. 411 mm) bis etwa 4300 MHz (Wellenlänge: ca. 70 mm), weiter bevorzugt mit einer Frequenz von etwa 700 MHz (Wellenlänge: ca. 428 mm) bis etwa 4000 MHz (Wellenlänge: ca. 75 mm), verwendet. Besonders bevorzugt sind die Frequenzen von 915 MHz ± 10 MHz (Wellenlänge: ca. 328 mm) und 2450 MHz ± 10 MHz (Wellenlänge: ca. 122 mm).

Bei einer Ausführungsform des erfindungsgemäßen Verfahrens werden in Schritt (b) bevorzugt zwei oder mehrere Frequenzen, vorzugsweise zwei Frequenzen, beispielsweise 915 MHz ± 10 MHz (Wellenlänge: ca. 328 mm) und 2450 MHz ± 10 MHz (Wellenlänge: ca. 122 mm), verwendet.

Die Verwendung von zwei oder mehreren Frequenzen, vorzugsweise von zwei Frequenzen, ist vorteilhaft, da unterschiedliche Frequenzen unterschiedliche Eindringtiefen aufweisen können. Bei zumindest teilweise gleichbleibenden Materialeigenschaften der in Schritt (b) zumindest teilweise zu trocknenden Formkörpergrünlinge, ist die Eindringtiefe umso größer, je niedriger die eingestellte Frequenz ist. Somit erwärmt sich in der Regel das Kernmaterial zumindest teilweise stärker, wenn niedrigere Frequenzen verwendet werden. Dies ermöglicht vorteilhafterweise eine gezieltere Steuerung der Erwärmung des Formkörpergrünlings durch das zumindest teilweise Anpassen der ausgewählten Frequenzen in Abhängigkeit des jeweils vorliegenden Formkörpers.

Die Leistung der Beaufschlagung mit elektromagnetischer Strahlung der vorgenannten Frequenzen wird vorzugsweise zumindest teilweise in Abhängigkeit von den Ausgangsmaterialien des Formkörpergrünlings, von dem Mischungsverhältnis, von der Stärke des Formkörpergrünlings, der Durchdringungstiefe, der Dauer der Beaufschlagung, der Kosten und/oder der Heizrate eingestellt.

Gemäß einer weiter bevorzugten Variation der Erfindung wird keine zusätzliche Wärmestrahlung während des Trocknens und/oder Brennens eingestrahlt.

Bei einer bevorzugten Ausführungsform hat sich gezeigt, dass bei einem erfindungsgemäßen Formkörpergrünling, vorzugsweise mit einer der oben beschriebenen Zusammensetzungen an Material und Füllgehalt, bei einer Stärke oder Dicke des Formkörpergrünlings aus einem Bereich von 6 mm bis 365 mm, bevorzugt von 7 mm bis 50 mm weiter bevorzugt von 8 mm bis 30 mm, weiter bevorzugt von 10 mm bis 20 mm, und einer bevorzugten Beaufschlagungsdauer von wenigstens 30 min, weiter bevorzugt aus einem Bereich von 30 min bis 360 min, noch weiter bevorzugt aus einem Bereich von 30 min bis 120 min, eine mittlere Leistungsdichte, bevorzugt Massenleistungsdichte, von wenigstens 600 W/kg, vorzugsweise aus einem Bereich von 600 W/kg bis 2000 W/kg zu sehr guten Ergebnissen führt. Diese Kombination aus Beaufschlagungsdauer und Leistung bietet einen geeigneten Kompromiss zwischen Energieersparnis und Produktionsdurchsatz.

Weiter bevorzugt wird zur Erzeugung der elektromagnetischen Strahlung wenigstens eine Vorrichtung, vorzugsweise werden zwei oder mehr Vorrichtungen, zur Erzeugung von elektromagnetischer Strahlung der oben angegebenen Frequenz(en) verwendet. Beispielsweise können in Schritt (b) eine oder mehrere Vorrichtungen zur Erzeugung von elektromagnetischer Strahlung der oben angegebenen Frequenz(en) verwendet werden, die jeweils unabhängig voneinander den wenigstens einen Formkörpergrünling mit unterschiedlichen oder gleichen Frequenzen beaufschlagen.

Eine geeignete Vorrichtung zur Erzeugung von elektromagnetischer Strahlung der oben angegebenen Frequenz ist beispielsweise ein Magnetron, wobei es sich dabei vorzugsweise um eine Vakuum-Laufzeitröhre zur Erzeugung elektromagnetischer Strahlung mit einer Frequenz aus einem Bereich von etwa 300 MHz (Wellenlänge: ca. 1000 mm) bis etwa 300 GHz (Wellenlänge: ca. 1 mm) handelt.

Beispielsweise sind die ein oder mehreren Vorrichtungen zur Erzeugung von elektromagnetischer Strahlung derart angeordnet, dass die Vorrichtungen zur Erzeugung von elektromagnetischer Strahlung jeweils der gleichen Oberfläche und/oder jeweils unterschiedlichen Oberflächen des Formkörpergrünlings zugewandt sind.

Weiter bevorzugt können zwei oder mehr Vorrichtungen zur Erzeugung von elektromagnetischer Strahlung jeweils unabhängig voneinander aktiviert und/oder deaktiviert werden. Es ist auch möglich, dass zwei oder mehr Vorrichtungen zur Erzeugung von elektromagnetischer Strahlung jeweils die gleiche und/oder unterschiedliche Frequenz(en) und/oder Leistung(en) emittieren.

Beispielsweise können zwei oder mehr Vorrichtungen zur Erzeugung von elektromagnetischer Strahlung verwendet werden, die derart angeordnet und/oder gesteuert sein können, dass der Formkörpergrünling der elektromagnetischen Strahlung zeitgleich oder nach einander ausgesetzt wird, wobei vorzugsweise jeweils die gleiche und/oder unterschiedliche Frequenz(en) und/oder Leistung(en) emittiert werden.

Insbesondere im Hinblick auf eine gleichbleibende Qualität der erhaltenen Produkte ist eine zumindest teilweise homogene Verteilung der verwendeten elektromagnetischen Strahlung mit einer Frequenz von maximal 300 GHz in Schritt (b) bevorzugt. Daher wird bei einer bevorzugten Ausführungsform der Erfindung Schritt (b) in einer Vorrichtung durchgeführt, die vorzugsweise wenigstens einen rotierenden und/oder oszillierenden Reflektor, beispielsweise in Form wenigstens eines Reflektorflügels, und/oder wenigstens eine rotierend und/oder oszillierend angebrachte und/oder wenigstens eine rotierende und/oder oszillierende Vorrichtung zur Erzeugung elektromagnetischer Strahlung mit einer Frequenz von maximal 300 GHz aufweist. Die durch diese Ausführungsform bewirkte gleichmäßigere Erwärmung des Formkörpergrünlings wird durch die homogenere Verteilung der elektromagnetischen Strahlung mit einer Frequenz von maximal 300 GHz in der Vorrichtung gefördert. Alternativ oder zusätzlich kann der Formkörpergrünling bewegt, insbesondere entlang einer Linie oder einer Kreisbahn bewegt, oder gedreht werden, um eine gleichmäßige Beaufschlagung mit der elektromagnetischen Strahlung zu ermöglichen.

Bei einer bevorzugten Ausführungsform der Erfindung wird während und/oder nach dem Schritt (b) wenigstens ein Ventilator verwendet.

Das Trocknen kann durch den wenigstens einen Ventilator, durch ein zumindest teilweises Austauschen von einer oberflächennahen mit Dampf, vorzugsweise Wasserdampf, angereicherten Gas, bevorzugt Luft, mit weniger angereichertem Gas vorzugsweise gefördert und/oder gesteuert werden.

Der wenigstens eine Ventilator und der wenigstens eine Reflektor, vorzugsweise Reflektorflügel, können derart gestaltet sein, dass sie jeweils die Funktion eines Ventilators und eines Reflektorflügels erfüllen.

Bei einer bevorzugten Ausführungsform der Erfindung wird während Schritt (b) zusätzlich Gas, vorzugsweise heißes Gas mit einer Temperatur von wenigstens 80 °C und vorzugsweise von maximal 150 °C, weiter bevorzugt aus einem Bereich von 90 °C bis 120 °C, zugeführt. Bevorzugt wird als Gas Luft verwendet. Bei einer bevorzugten Ausführungsform wird zumindest eine der vorzugsweise mehreren Austrittsdüsen für Gas zumindest teilweise direkt auf wenigstens einen Formkörpergrünling gerichtet.

Ein Abführen von Dampf, vorzugsweise Wasserdampf, von dem wenigstens einen Formkörpergrünling wird durch ein Kontaktieren des Formkörpergrünlings mit Gas, vorzugsweise heißem Gas, weiter bevorzugt aus einem Bereich von 90 °C bis 120 °C, erreicht. Durch ein gezieltes Kontaktieren des Formkörpergrünlings mit Gas, vorzugsweise heißem Gas, wird bevorzugt die Ausbildung einer Sättigung des Gases mit Dampf in der den wenigstens einen Formkörpergrünling umgebenden Gasphase kontrolliert, wodurch das Trocknen des Formkörpergrünlings gesteuert werden kann.

Bei einer weiteren Ausführungsform wird zumindest eine der vorzugsweise ein oder mehreren Austrittdüsen nicht direkt auf den Formkörpergrünling gerichtet.

Bei einer bevorzugten Ausführungsform der Erfindung wird der wenigstens eine Formkörpergrünling angefeuchtet, vorzugsweise mit Flüssigkeit, vorzugsweise Wasser, in Schritt (b) kontaktiert.

Beispielsweise kann ein Kontaktieren mit Flüssigkeit, vorzugsweise Wasser, durch mit wenigstens einer Sprühdüse versehenes Befeuchtungssystem erfolgen, wobei Flüssigkeit, vorzugsweise Wasser, auf den Formkörpergrünling aufgebracht wird und/oder in das Umgebungsvolumen versprüht wird. Durch Kontaktieren mit Flüssigkeit, vorzugsweise Wasser, kann die Feuchtigkeit des Formkörpergrünlings und/oder des Umgebungsvolumens, beispielsweise durch Sättigung mit Dampf, vorzugsweise Wasserdampf, der den Formkörpergrünling umgebenden Gasphase, eingestellt werden. Damit kann einer zu raschen Trocknung, insbesondere der Randbereiche, des wenigstens einen Formkörpergrünlings entgegengewirkt werden. Dadurch kann vorzugsweise eine Ausbildung von inneren Spannungen und/oder durch innere Spannung verursachte Risse vermindert werden.

Weiter bevorzugt ist eine, vorzugsweise sind mehrere, Austrittsdüse(n) des Befeuchtungssystems zumindest teilweise direkt auf den Formkörpergrünling gerichtet.

Alternativ oder kumulativ kann eine, vorzugsweise können mehrere, Austrittsdüse(n) des Befeuchtungssystems nicht direkt auf den Formkörpergrünling gerichtet werden.

Bei einer bevorzugten Ausführungsform der Erfindung weist eine Vorrichtung, mit der das Verfahren durchgeführt wird, eine Auskleidung auf, die bei den in den Verfahrensschritten, insbesondere in Schritt (c), auftretenden Temperaturen bis zu einer Temperatur von wenigstens 1500 °C formbeständig ist.

Bei einer bevorzugten Ausführungsform der Erfindung weist eine Vorrichtung, in der das Verfahren durchgeführt wird, wenigstens eine dem wenigstens einen Formkörpergrünling zugewandte Auskleidung auf, welche mindestens einen Mikrowellen-Suszeptor, vorzugsweise in Form der vorgenannten Mikrowellen-Suszeptor-Partikel, umfasst. Die Auskleidung kann hierbei mit dem wenigstens einen Mikrowellen-Suszeptor beschichtet sein, vorzugsweise auf zumindest Teilbereichen einer dem Formkörpergrünling zugewandten Oberfläche der Auskleidung. Beispielsweise kann eine derart ausgestaltete Auskleidung durch eine Trockenbeschichtung mit mindestens einem Mikrowellen-Suszeptor, vorzugsweise in Form der vorgenannten Mikrowellen-Suszeptor-Partikel, und/oder durch Beschichtung mit einer mindestens einen Mikrowellen-Suszeptor, vorzugsweise in Form der vorgenannten Mikrowellen-Suszeptor-Partikel, enthaltenden Glasur nach aus dem Stand der Technik bekannten Beschichtungsverfahren bereitgestellt werden. Alternativ kann zumindest ein Teilbereich der wenigstens einen Auskleidung selbst als Mikrowellen-Suszeptor wirken. Der Vorteil hierbei ist, dass eine entsprechend ausgestaltete Auskleidung mit der in dem Verfahren eingesetzten elektromagnetischen Strahlung mit einer Frequenz von maximal 300 GHz wechselwirken kann. Damit kann, wie vorstehend beschrieben, Wärme abgestrahlt und ein Trocknen des Formkörpergrünlings wird beschleunigt.

Bei einer weiteren bevorzugten Ausführungsform der Erfindung weist eine Vorrichtung, in der das Verfahren durchgeführt wird, wenigstens eine Auskleidung auf, die wenigstens ein Element umfasst, das elektromagnetische Strahlen mit einer Frequenz von maximal 300 GHz (Wellenlänge: ca. 1 mm), vorzugsweise aus einem Bereich von 730 MHz (Wellenlänge: ca. 411 mm) bis 4300 MHz (Wellenlänge: ca. 70 mm), vorzugsweises von 700 MHz (Wellenlänge: ca. 428 mm) bis 4000 MHz (Wellenlänge: ca. 75 mm), zumindest in einem Teilbereich reflektieren kann. Vorzugsweise umfasst das wenigstens eine Element in dem wenigstens einen Teilbereich wenigstens eine reflektierende Oberfläche, die weiter bevorzugt wenigstens ein Metall, eine Legierung oder eine Mischung davon umfasst oder daraus besteht. Die wenigstens eine reflektierende Oberfläche ist vorzugsweise zumindest auf einer dem Formkörpergrünling zugewandten Oberfläche der wenigstens einen Auskleidung angeordnet.

Die wenigstens eine reflektierende Oberfläche kann beispielsweise spiegelnd und/oder poliert ausgebildet sein. Beispielsweise kann die wenigstens eine reflektierende Oberfläche in Form einer Beschichtung und/oder eines Reflexionskörpers ausgebildet sein.

Vorzugsweise weist ein geeigneter Reflexionskörper, je nach Anwendung, eine beliebige geometrische Form auf. Weiter bevorzugt kann ein geeigneter Reflexionskörper in Form eines Polyeders, einer Kugel, eines Kugelsegments, eines Kegels, eines Zylinders, eines Kegelstumpfs, eines unregelmäßig gestalteten Körpers oder Kombinationen davon ausgebildet sein. Ein geeigneter Polyeder kann vorzugsweise in Form eines Quaders, Pyramide, Prismas, Prismatoids, unregelmäßig gestalteten Körpers oder einer Kombination davon ausgebildet sein.

Weiter bevorzugt ist ein geeigneter Reflexionskörper flach oder gewölbt ausgebildet.

Das wenigstens eine wenigstens einen reflektierenden Teilbereich aufweisende Element kann innerhalb der verwendeten Vorrichtung so angeordnet sein, dass die eingestrahlte elektromagnetische Strahlung in Richtung wenigstens eines Formkörpergrünlings und/oder wenigstens eines Trägerelements und/oder wenigstens einer Auskleidung zumindest teilweise reflektiert wird.

Die von dem wenigstens einen reflektierenden Teilbereich aufweisenden Element reflektierte elektromagnetische Strahlung mit einer Frequenz von maximal 300 GHz kann weiter beispielsweise durch wenigstens einen Formkörpergrünling selbst, durch wenigstens ein Mikrowellen-suszeptorhaltiges Trägerelement und/oder durch wenigstens eine Mikrowellen-suszeptorhaltige Auskleidung absorbiert werden und somit zu einem effektiveren Erwärmen des Formkörpergrünlings genutzt werden.

Bei einer weiteren bevorzugten Ausführungsform der Erfindung weist der nach Schritt (a) erhaltene Formkörpergrünling einen Restfeuchtegehalt zu Beginn des Schrittes (b) aus einem Bereich von 4 Gew.-% bis 30 Gew.-%, vorzugsweise von 5 Gew.-% bis 25 Gew.-%, weiter bevorzugt von 10 Gew.-% bis 20 Gew.-%, auf. Der Restfeuchtegehalt des Formkörpergrünlings ist jeweils bezogen auf das Gesamtgewicht des zu Beginn von Schritt (b) bereitgestellten Formkörpergrünlings. Der Restfeuchtegehalt wird durch die weiter oben bereits beschriebene Methode durch Austrocknung bis zur Gewichtskonstanz bestimmt.

Der oben angegebene Gehalt an Restfeuchte hat den Vorteil, dass die enthaltenen Wassermoleküle zumindest teilweise durch die verwendete elektromagnetische Strahlung mit einer Frequenz von maximal 300 GHz angeregt werden können und das Erwärmen des Formkörpergrünlings unterstützen. Durch den oben angegebenen Restfeuchtegehalt kann eine möglichst gleichmäßige Trocknung des Formkörpergrünlings ermöglicht werden. Damit kann die mechanische Stabilität des getrockneten Formkörpergrünlings erreicht werden.

In Schritt (c) wird der in Schritt (a) bereitgestellte wenigstens eine Formkörpergrünling und/oder der optional in Schritt (b) erhaltene wenigstens eine zumindest teilweise getrocknete Formkörpergrünling unter Beaufschlagen mit elektromagnetischer Strahlung mit einer Frequenz von maximal 300 GHz gebrannt, wobei wenigstens ein gebrannter keramischer Formkörper erhalten wird. Insbesondere kann der erfindungsgemäße gebrannte keramische Formkörper erhalten werden.

Vorzugsweise weist ein gebrannter keramischer Formkörper nach Schritt (c), weiter bevorzugt nach Abkühlen auf Raumtemperatur, zumindest bereichsweise ausgebildete feste Sinterbrücken zwischen den im Formkörper enthaltenen Partikeln auf.

Vorzugsweise wird in Schritt (c) elektromagnetische Strahlung mit einer Frequenz von maximal 300 GHz (Wellenlänge: ca. 1 mm) verwendet. Erfindungsgemäß wird elektromagnetische Strahlung mit einer Frequenz aus einem Bereich von etwa 300 MHz (Wellenlänge: ca. 1000 mm) bis etwa 300 GHz (Wellenlänge: ca. 1 mm), vorzugsweise mit einer Frequenz von etwa 600 MHz (Wellenlänge: ca. 500 mm) bis etwa 6000 MHz (Wellenlänge: ca. 50 mm), vorzugsweise mit einer Frequenz von etwa 730 MHz (Wellenlänge: ca. 411 mm) bis etwa 4300 MHz (Wellenlänge: ca. 70 mm), weiter bevorzugt mit einer Frequenz von etwa 700 MHz (Wellenlänge: ca. 428 mm) bis etwa 4000 MHz (Wellenlänge: ca. 75 mm), verwendet. Besonders bevorzugt sind die Frequenzen von 915 MHz ± 10 MHz (Wellenlänge: ca. 328 mm) und 2450 MHz ± 10 MHz (Wellenlänge: ca. 122 mm).

Bei einer Ausführungsform des erfindungsgemäßen Verfahrens werden in Schritt (c) bevorzugt zwei oder mehr Frequenzen, vorzugsweise zwei Frequenzen, beispielsweise 915 MHz ± 10 MHz (Wellenlänge: ca. 328 mm) und 2450 MHz ± 10 MHz (Wellenlänge: ca. 122 mm), verwendet.

Bei einer bevorzugten Ausführungsform der Erfindung wird während der Durchführung des Schrittes (c) die, insbesondere mittels elektromagnetische Strahlung, eingebrachte Leistung variiert, bevorzugt erhöht, weiter bevorzugt stufenweise und/oder kontinuierlich erhöht.

Dadurch kann der Brennvorgang in Schritt (c) des Formkörpergrünlings besser kontrolliert werden. Vorzugsweise können dadurch ebenfalls thermische Spannungen im Formkörpergrünling zumindest teilweise reduziert werden. Des Weiteren kann beispielsweise durch eine Leistungsspitze der Sinterprozess relativ energiesparend vervollständigt werden.

Vorzugsweise wird der Formkörpergrünling mit elektromagnetischer Strahlung in Schritt (c) für einen Zeitraum von wenigstens 15 min, bevorzugt aus einem Bereich von 30 min bis 300 min, beaufschlagt. Dadurch werden vorzugsweise homogene strukturelle und/oder erhöhte mechanische Eigenschaften im gebrannten keramischen Formkörper erzeugt.

Erfindungsgemäß wird Schritt (c) in einem Temperaturbereich durchgeführt, in dem der gebrannte keramische Formkörper am Ende von Schritt (c) zumindest teilweise eine Oberflächentemperatur aus einem Bereich von 900 °C bis 1400 °C, vorzugsweise von 1000 °C bis 1200 °C, aufweist.

Vorzugsweise wird der wenigstens eine Formkörpergrünling in Schritt (c) mit elektromagnetischer Strahlung mit einer mittleren Leistungsdichte, vorzugsweise Massenleistungsdichte, von wenigstens 600 W/kg, bevorzugt von wenigstens 700 W/kg, weiter bevorzugt von wenigstens 800 W/kg, beaufschlagt, jeweils bezogen auf die Masse des zu Beginn von Schritt (c) vorliegenden wenigstens einen Formkörpergrünlings.

Bei einer weiteren bevorzugten Ausführungsform der Erfindung weist der in Schritt (a) bereitgestellte wenigstens eine Formkörpergrünling und/oder der optional nach Schritt (b) erhaltene zumindest teilweise getrocknete Formkörpergrünling einen Restfeuchtegehalt zu Beginn des Schrittes (c) aus einem Bereich von mehr als 0 Gew.-% bis 10 Gew.-%, vorzugsweise von 1 Gew.-% bis 7 Gew.-%, weiter bevorzugt von 2 Gew.-% bis 4 Gew.-%, auf. Der Restfeuchtegehalt des Formkörpergrünlings und/oder des zumindest teilweise getrockneten Formkörpergrünlings bezieht sich jeweils auf das Gesamtgewicht des jeweiligen Formkörpergrünlings zu Beginn von Schritt (c).

Der im vorangehenden Absatz angegebene Restfeuchtegehalt hat den Vorteil, dass die enthaltenen Wassermoleküle durch die elektromagnetische Strahlung mit einer Frequenz von maximal 300 GHz angeregt werden können und somit das Erwärmen des Formkörpergrünlings unterstützen. Weiter bevorzugt wird durch den angegebenen Restfeuchtgehalt das Verfahren zeitlich verkürzt, wobei die Gefahr eines Abplatzens während des Brennvorganges verringert wird.

Bei einer bevorzugten Ausführungsform der Erfindung wird der in Schritt (a) bereitgestellte und/oder in Schritt (b) erhaltene wenigstens eine Formkörpergrünling, zumindest zu Beginn von Schritt (c), mit wenigstens einer Umhüllung, vorzugsweise vollständig oder bereichsweise, umgeben. Die Umhüllung ist vorzugweise gegenüber der verwendeten elektromagnetischen Strahlung mit einer Frequenz von maximal 300 GHz zumindest teilweise durchlässig, bevorzugt zu mindestens 20 % durchlässig, weiter bevorzugt zu mindestens 50 % durchlässig, noch weiter bevorzugt zu mindestens 70 % durchlässig, fern noch weiter bevorzugt zu mindestens 90 %. Weiter weist die Umhüllung vorzugsweise eine geringe Wärmeleitfähigkeit auf. Vorzugsweise weist die Umhüllung eine Wärmeleitfähigkeit, bevorzugt bei 1000 °C und trockener Atmosphäre, von maximal 0,30 W/(m·K), weiter bevorzugt von maximal 0,25 W/(m K), noch weiter bevorzugt von maximal 0,20 W/(m·K), ferner noch weiter bevorzugt von maximal 0,18 W/(m·K), auf. Vorzugsweise steht die Umhüllung zumindest teilweise in direkten Kontakt mit dem wenigstens einen Formkörpergrünling. Die Umhüllung kann derart gestaltet sein, dass sie eine stützende und/oder unterstützende Funktion in Bezug auf den Formkörpergrünling aufweist, wobei insbesondere die Form des wenigstens einen Formkörpergrünlings in Schritt (c) geschützt, beibehalten und/oder beeinflusst wird. Beispielsweise kann die Umhüllung als Form gestaltet sein, in die der Formkörpergrünling eingelegt wird, oder die über den Formkörpergrünling gestülpt wird.

Vorzugsweise umfasst die zumindest eine Umhüllung wenigstens ein keramisches, vorzugsweise nicht-oxidkeramisches und/oder oxidkeramisches Material, dass weiter bevorzugt in Form von Fasern, Fäden, Wolle, Vlies, und/oder als Faserverbund und/oder als Matte und/oder als Platte vorliegt.

Somit dämmt die Umhüllung bevorzugt den Wärmeverlust des Formkörpergrünlings und ist vorzugsweise gegenüber Wärmestrahlung nur teilweise durchlässig, vorzugsweise undurchlässig. Hierbei kann der Formkörpergrünling mit elektromagnetischer Strahlung durch die Umhüllung hindurch beaufschlagt und somit erwärmt werden, wobei die Umhüllung dabei eine Abgabe von Wärmestrahlung an die den umhüllten Formkörpergrünling umgebende Gasphase reduziert. Dadurch kann der zumindest für Schritt (c) benötigte Energiebedarf, um den Formkörpergrünling auf die gewünschte Temperatur zu erwärmen, reduziert werden. Weiter werden dadurch auch weitere Elemente der Vorrichtung in der das erfindungsgemäße Verfahren durchgeführt wird, besser vor einer zu starken thermischen Belastung geschützt.

Vorzugsweise wird der zumindest teilweise getrocknete Formkörpergrünling nach Schritt (b) und/oder gebrannte keramische Formkörper nach Schritt (c) abgekühlt. Dies wird beispielsweise durch ein Deaktivieren der wenigstens einen die elektromagnetische Strahlung erzeugenden Vorrichtung durchgeführt und/oder kann durch wenigstens einen Austausch der den gebrannten keramischen Formkörper und/oder den Formkörpergrünling umgebenden Gasphase erfolgen.

Der Abkühlvorgang nach Schritt (b) und/oder Schritt (c), weiter bevorzugt nach Schritt (c), kann, vorzugsweise jeweils unabhängig voneinander, stufenweise oder kontinuierlich erfolgen.

Beispielsweise kann das Abkühlen derart stattfinden, dass der gebrannte keramische Formkörper und/oder Formkörpergrünling getempert wird. Unter dem Begriff "Tempern" wird verstanden, dass der gebrannte keramische Formkörper und/oder Formkörpergrünling über einen bestimmten Zeitraum, vorzugsweise für einen Zeitraum aus einem Bereich von 1 h bis 7 h, vorzugsweise von 2 h bis 5 h, bei einer Temperatur, bevorzugt aus einem Bereich von 900 °C bis 400 °C, weiter bevorzugt von 750 °C bis 500 °C, gehalten und/oder von einer Temperatur zu einer niedrigeren Temperatur des vorstehenden Bereichs abgekühlt wird.

Durch ein derart kontrolliertes Abkühlen und/oder Tempern wird vorzugsweise ein Auftreten von mechanischen Spannungen innerhalb des gebrannten keramischen Formkörpers und/oder Formkörpergrünlings verhindert.

Es ist auch möglich den Abkühlvorgang durchzuführen, wenn der Formkörpergrünling von der oben beschriebenen Umhüllung umgeben ist. Hierdurch wird ein besonders energieeffizientes Abkühlen durchgeführt werden. Alternativ oder zusätzlich kann während dem Abkühlvorgang das den Formkörpergrünling umgebende Gas, vorzugsweise heiße Gas, abgesaugt werden. Bevorzugt handelt es sich bei dem Gas um Luft. Vorzugsweise kann das abgesaugte Gas an einem anderen Ort oder während eines anderen Verfahrensschritts dem Verfahren zugeführt werden. Hierdurch kann weiter der CO₂-Fussabdruck eines durch das Verfahren hergestellten gebrannten keramischen Formkörpers reduziert werden.

Der Schritt (c) kann am gleichen Ort einer Vorrichtung, bspw. Kammer oder Tunnel, wie Schritt (b) durchgeführt werden, indem beim Wechsel von Schritt (b) zu Schritt (c) lediglich die eingestellten Parameter, beispielsweise die Leistung der applizierten elektromagnetischen Strahlung und/oder die Zeit mit der der Formkörper mit elektromagnetischer Strahlung beaufschlagt wird, im erfindungsgemäßen Verfahren auf die für Schritt (c) optimierten Parameter eingestellt werden.

Weiter kann der in Schritt (b) zumindest teilweise getrocknete Formkörpergrünling an einen anderen Ort der Vorrichtung, beispielsweise in einer weiteren Kammer, angeordnet werden. Auch für diesen Ort gelten die in Schritt (b) ausgeführten Ausführungsformen.

Weiter kann der zumindest teilweise getrocknete Formkörpergrünling nach Schritt (b) entnommen und gelagert werden, bevor er in dem erfindungsgemäßen Verfahren in Schritt (c) gebrannt wird.

Weiter bevorzugt können Schritt (b) und Schritt (c) kombiniert durchgeführt werden, wobei zunächst der in Schritt (a) bereitgestellte Formkörpergrünling gemäß dem oben beschriebenen Verfahren optional getrocknet wird, vorzugsweise unter Beaufschlagen mit elektromagnetischer Strahlung mit einer Frequenz von maximal 300 GHz. Anschließend wird der Formkörpergrünling unter Beaufschlagen mit der zuvor beschriebenen elektromagnetischen Strahlung mit einer Frequenz von maximal 300 GHz gebrannt, wobei weiter bevorzugt die für das Trocknen in Schritt (b) verwendete Leistung der applizierten elektromagnetischen Strahlung geringer ist als die für das Brennen in Schritt (c) verwendete Leistung der applizierten elektromagnetischen Strahlung. Weiter kann die Dauer der Beaufschlagung mit elektromagnetischer Strahlung in Schritt (b) kürzer sein als die Dauer der Beaufschlagung mit elektromagnetischer Strahlung in Schritt (c).

Weiter bevorzugt kann während einer kombinierten Durchführung von Schritt (b) und Schritt (c) die Leistung der elektromagnetischen Strahlung kontinuierlich und/oder stufenweise erhöht werden. Weiter bevorzugt kann/können dabei in Schritt (b), und/oder zwischen Schritt (b) und Schritt (c), und/oder in Schritt (c), und/oder nach Schritt (c) ein oder mehrere Leistungsplateaus gehalten werden.

Bei einer bevorzugten Ausführungsform wird in Schritt (b) und Schritt (c) elektromagnetische Strahlung von maximal 300 GHz (Wellenlänge: ca. 1 mm) verwendet. Weiter bevorzugt wird elektromagnetische Strahlung mit einer Frequenz aus einem Bereich von etwa 300 MHz (Wellenlänge: ca. 1000 mm) bis etwa 300 GHz (Wellenlänge: ca. 1 mm), vorzugsweise mit einer Frequenz von etwa 600 MHz (Wellenlänge: ca. 500 mm) bis etwa 6000 MHz (Wellenlänge: ca. 50 mm), vorzugsweise mit einer Frequenz von etwa 730 MHz (Wellenlänge: ca. 411 mm) bis etwa 4300 MHz (Wellenlänge: ca. 70 mm), weiter bevorzugt mit einer Frequenz von etwa 700 MHz (Wellenlänge: ca. 428 mm) bis etwa 4000 MHz (Wellenlänge: ca. 75 mm), verwendet. Besonders bevorzugt sind die Frequenzen von 915 MHz ± 10 MHz (Wellenlänge: ca. 328 mm) und 2450 MHz ± 10 MHz (Wellenlänge: ca. 122 mm).

Weiter bevorzugt beträgt die Frequenz der in Schritt (b) und/oder Schritt (c) verwendeten elektromagnetischen Strahlung jeweils unabhängig voneinander 915 MHz ± 10 MHz (Wellenlänge: ca. 328 mm) bis 2450 MHz ± 10 MHz (Wellenlänge: ca. 122 mm).

Bevorzugt wird in Schritt (b) und/oder Schritt (c) zur Erzeugung von elektromagnetischer Strahlung wenigstens eine, vorzugsweise werden zwei oder mehr, Vorrichtung(en) zur Erzeugung von elektromagnetischer Strahlung der oben angegebenen Frequenzen verwendet. Beispielsweise können in Schritt (b) und/oder Schritt (c) ein oder mehrere Vorrichtungen zur Erzeugung von elektromagnetischer Strahlung der oben angegebenen Frequenz(en) verwendet werden, die jeweils unabhängig voneinander unterschiedliche oder gleiche Frequenzen erzeugen.

Bei einer bevorzugten Ausführungsform der Erfindung kann die in Schritt (b) und in Schritt (c) verwendete elektromagnetische Strahlung mit einer Frequenz von maximal 300 GHz eine zueinander unterschiedliche Leistung aufweisen. Abhängig von der Zusammensetzung und Stärke des optional zu trocknenden und zu brennenden Formkörpergrünlings kann somit die Erwärmung des Formkörpergrünlings kontrolliert werden. Insbesondere bei stärkeren Formkörpergrünlingen ist somit eine diffusionskontrollierte Trocknung möglich und verringert dadurch beispielsweise Spannungen, Verformungen, Abplatzungen und/oder Risse.

### Figuren

Die Erfindung wird im Folgenden anhand von Figuren und Ausführungsbeispielen erläutert, ohne hierauf beschränkt zu sein.
- Fig. 1a: zeigt eine schematische Schnittdarstellung eines gebrannten keramischen Formkörpers mit einem Randbereich und einem Kernmaterial.
- Fig. 1b bis 1d: zeigen jeweils schematische Schnittdarstellungen eines Formkörpergrünlings, wobei der Formkörpergrünling jeweils Mikrowellen-Suszeptor-Partikel aufweist.
- Fig. 2a und 2b: zeigen einen schematischen Verlauf des erfindungsgemäßen Verfahrens anhand der durchzuführenden Verfahrensschritte.
- Fig. 3: zeigt mittels Röntgenelektronenmikroskop (REM) aufgenommene Mikroskopaufnahmen jeweils des Kernmaterials und des Randbereichs eines gebrannten keramischen Formkörpers.
- Fig. 4: zeigt mittels REM aufgenommene Mikroskopaufnahmen jeweils des Kernmaterials und des Randbereichs eines weiteren gebrannten keramischen Formkörpers.
- Fig. 5: zeigt mittels REM aufgenommene Mikroskopaufnahmen jeweils des Kernmaterials und des Randbereichs eines weiteren gebrannten keramischen Formkörpers.
- Fig. 6: zeigt mittels REM aufgenommene Mikroskopaufnahmen des Kernmaterials und des Randbereichs von weiteren gebrannten keramischen Formkörper.
- Fig. 7a und 7b: zeigen durch Röntgendiffraktometrie (XRD) ermittelte Diffraktogramme des Kernmaterials eines gebrannten keramischen Formkörpers.
- Fig. 8: zeigt ein weiteres durch Röntgendiffraktometrie (XRD) ermitteltes Diffraktogramme des Kernmaterials eines gebrannten keramischen Formkörpers.

### Ausführungsbeispiele

Die nachstehend beschriebenen Beispiele und Figuren sollen die vorliegende Erfindung näher erläutern, jedoch in keiner Weise beschränken.

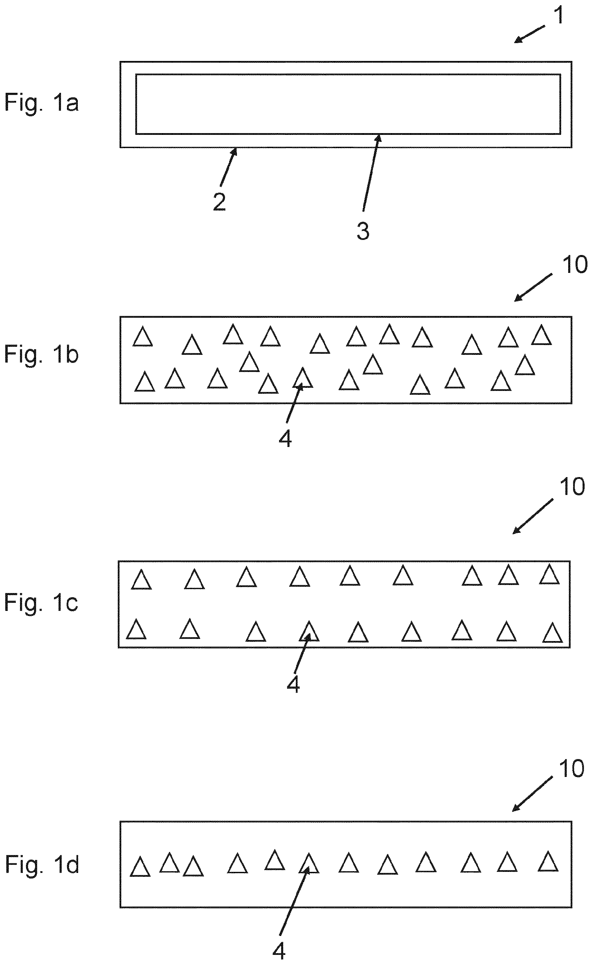

Insbesondere zeigen die nachfolgenden Versuchsergebnisse den Einfluss des Herstellungsverfahrens auf die strukturellen Eigenschaften eines gebrannten keramischen Formkörpers 1, wobei der, wie in Fig. 1a schematisch gezeigte, gebrannte keramische Formkörper ein Kernmaterial 3 und einen das Kernmaterial 3 vollständig umschließenden Randbereich 2 aufweist.

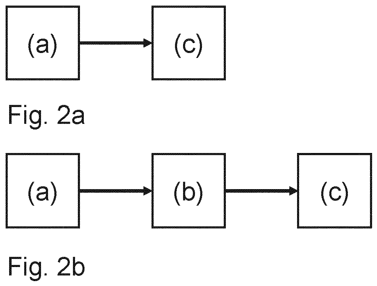

Die Reihenfolge der Verfahrensschritte des erfindungsgemäßen Verfahrens ist schematisch in Fig. 2a und 2b dargestellt, wobei das erfindungsgemäße Verfahren zumindest die folgenden Verfahrensschritte umfasst:
(a) Bereitstellen wenigstens eines Formkörpergrünlings 10,
(b) optional Trocknen des wenigstens einen Formkörpergrünlings 10 unter Erhalt eines zumindest teilweise getrockneten Formkörpergrünlings 10, und
(c) Brennen des, optional in Schritt (b) erhaltenen wenigstens einen zumindest teilweise getrockneten, Formkörpergrünlings 10 unter Erhalt wenigstens eines gebrannten keramischen, vorzugsweise grobkeramischen, Formkörpers 1.

Um den vorstehend genannten Einfluss des Herstellungsverfahrens zu zeigen, wurden, analog zu Schritt (a) des erfindungsgemäßen Verfahrens, aus mehreren Formmassen Formkörpergrünlinge 10 bereitgestellt, wobei aus jeder Formmasse zwei Formkörpergrünlinge 10 bereitgestellt wurden.

Anschließend wurden jeweils die zwei Formkörpergrünlinge 10 zur Durchführung von weiteren Verfahrensschritten zwei unterschiedlichen Verfahren zugeführt. Das erste Verfahren entsprach einem Verfahren mittels Beaufschlagung mit elektromagnetischer Strahlung mit einer Frequenz von maximal 300 GHz. Das zweite Verfahren entsprach einem konventionellen Verfahren mittels Beaufschlagung mit thermischer Strahlung in einem Tunnelofen, welcher durch Verbrennung von Erdgas betrieben wurde. Ein bereitgestellter Formkörpergrünling 10 jeder Formmasse wurde dem ersten Verfahren und ein weiterer bereitgestellter Formkörpergrünling 10 jeder Formmasse dem zweiten Verfahren zugeführt.

### Beispiel 1: Gebrannte keramische Formkörper "MW1" und "T1"

Eine erste Formmasse aus der Formkörpergrünlinge 10 bereitgestellt wurden, wies die folgende Zusammensetzung auf, bezogen auf das Trockengewicht des Formkörpergrünlings 10, auf:

| | |
|---|---|
| Lehm: | 74,8 Gew.-% |
| Ton: | 22,5 Gew.-% |
| Zuschläge: | 2,7 Gew.-% |

Es ist zusätzlich auch möglich, dass die Formmasse wenigstens einen Mikrowellen-Suszeptor, der vorzugsweise aus der Gruppe, die aus Carbiden, Nitriden, Boriden, Graphit, Siliciden, und Mischungen davon besteht, ausgewählt ist. Beispielsweise kann der Mikrowellen-Suszeptor 4 SiC aufweisen oder daraus bestehen, wobei Mikrowellen-Suszeptor 4 vorzugweise in Form von diskreten Mikrowellen-Suszeptor-Partikeln 4, homogen oder heterogen im bereitgestellten Formkörpergrünling verteilt angeordnet sind. Die Mikrowellen-Suszeptor-Partikel 4 können beispielsweise einen volumenäquivalenten Kugeldurchmesser, x_{50, 3}, von maximal 109 µm bei einem Anteil von max. 10 Gew.-% bezogen auf das Trockengewicht des bereitgestellten Formkörpergrünlings aufweisen.

Die Fig. 1b zeigt eine schematische homogene Verteilung von diskreten Mikrowellen-Suszeptor-Partikel 4 in einem Formkörpergrünling 10. Fig. 1c und 1d zeigen einen Formkörpergrünling 10, bei dem die diskreten Mikrowellen-Suszeptor-Partikel 4 jeweils heterogen entweder in dem Material verteilt sind, die den Randbereich 2 oder das Kernmaterial 3 des gebrannten keramischen Formkörpers 1 bildet.

Die Formkörpergrünlinge 10 aus der ersten Formmasse wurden bereitgestellt. Hierzu wird der Lehm zunächst in einem Kollergang vorzerkleinert wird. Anschließend wird der Lehm durch Walzen mit verstellbaren Walzenspalten auf eine Partikelgröße von kleiner oder gleich 0,5 mm zerkleinert. Der Ton wird mit Walzen mit verstellbaren Walzenspalt auf eine Partikelgröße von kleiner oder gleich 0,6 mm zerkleinert. Zusätzlich wird zur Vermeidung von Ausblühungen dem Ton Bariumcarbonat zugegeben. Anschließend werden Lehm, Ton und Zuschläge in einem Doppelwellenmischer zu der Formmasse vermischt und mit ca. 20 Gew.-% Restfeuchtegehalt, bezogen auf jeweilige Trockengewicht des Formkörpergrünlings 10, eingelagert, um eine gleichmäßigere Durchfeuchtung zu erreichen. Nach der Lagerung wird die Formmasse einer Dachziegel-Revolverpresse zugeführt, die mittels Gipsformen die Formkörpergrünlinge 10 formt.

Diese Formkörpergrünlinge 10 wiesen jeweils ein Gewicht von 4100 g und einen Restfeuchtegehalt von jeweils ca. 18 Gew.-% auf, bezogen auf jeweilige Trockengewicht des Formkörpergrünlings 10. Die Formkörpergrünlinge 10 wurden in Form von Dachziegeln (Modell: E58-S) bereitgestellt. Alternativ ist es möglich, Formkörpergrünlinge 10 auch in Form einer Fassadenplatte, einer Muffe, eines Klinkersteins, eines Ziegelsteins, eines Schamottesteins oder eines Schornsteinelement bereitzustellen.

Der Abstand von der einem Betrachter zugewandten Oberfläche zu einer gegenüberliegenden Oberfläche des Formkörpergrünlings war ausgewählt aus dem Bereich von 9 mm bis 35 mm, bei senkrechter Betrachtung auf die von dem Formkörpergrünling 10 aufgespannte Frontalebene. Bei senkrechter Betrachtung auf die von einem Formkörpergrünling 10 aufgespannte Frontalebene, weist die laterale Ausdehnung des Formkörpergrünlings 10 Abmessungen von 28,5 cm x 45,5 cm auf.

Anschließend wurden die Formkörpergrünlinge 10 den oben genannten Verfahren zugeführt, um gebrannte keramische Formkörper 1 zu erhalten.

Zur Durchführung des erfindungsgemäßen Verfahrens wurde ein Formkörpergrünling 10 in einer Mikrowellenkammer (Fricke und Mallah Microwave Technology GmbH) angeordnet, welche ein Kammervolumen von 1,7 m³ und vier einzeln ansteuerbaren Magnetrons mit jeweils einer maximalen Mikrowellenleistung von 6 kW aufwies. Anschließend wurde der Formkörpergrünling für 90 min mit einer Mikrowellenleistung von 1300 W und einer Frequenz von 2450 MHz getrocknet, wie in Schritt (b) des erfindungsgemäßen Verfahrens beschrieben.

Danach wurde der Formkörpergrünling 10 mit Hochtemperatur-Keramikfasern in Form einer Fasermatte vollständig umhüllt. Die Abmessungen der Hochtemperatur-Keramikfaser-Umhüllung betrugen in der Länge 50 cm, in der Breite 33 cm und in der Höhe 8 cm. Anschließend wurde der Formkörpergrünling 10 gemäß Schritt (c) des erfindungsgemäßen Verfahrens für 230 min mit einer stufenweise variierenden Mikrowellenleistung zwischen 1700 W bis 4900 W und einer Frequenz von 2450 MHz gebrannt. Im Anschluss wurde die Beaufschlagung mit der Strahlung beendet und der Formkörper zusammen mit der Hochtemperatur-Keramikfaser-Umhüllung zur Abkühlung für 14 h auf Raumtemperatur in der Mikrowellenkammer gelassen. Erhalten wurde der unter Verwendung von Mikrowellen (MW) gebrannte keramische Formkörper 1 der im Folgenden als gebrannter keramischer Formkörper "MW1" bezeichnet wird.

Zur Durchführung des konventionellen Verfahrens in einem Tunnelofen (T) wurde ein weiterer Formkörpergrünling 10 erst für 40 h in einem Kammertrockner auf einer Metall-Kassette getrocknet. Anschließend wurde der getrocknete Formkörpergrünling 10 in einem Tunnelofen in einer H-Kassette angeordnet und liegend auf einem Ofenwagen mit einer Durchlaufzeit von 24 h von Ofeneinfahrt bis Ofenausfahrt gebrannt. Die Verweildauer im Hochtemperaturbereich, also bei Temperaturen von wenigstens 1000°C, betrug ca. 4,5 h. Erhalten wurde der gebrannte keramische Formkörper 1 der im Folgenden als gebrannter keramischer Formkörper "T1" bezeichnet wird.

### Beispiel 2: Gebrannte keramische Formkörper "MW2" und "T2"

Eine zweite Formmasse aus der zwei Formkörpergrünlinge 10 bereitgestellt wurden, wies die folgende Zusammensetzung auf, bezogen auf das Trockengewicht des Formkörpergrünlings, auf:

| | |
|---|---|
| Lehm: | 70 Gew.-% |
| Ton: | 24,5 Gew.-% |
| Zuschläge: | 5,5 Gew.-% |

Die Formkörpergrünlinge 10 wurden aus der zweiten Formmasse bereitgestellt, wie es auch bereits hinsichtlich der ersten Formmasse beschrieben wurde, bis auf, dass die Zerkleinerung der Materialien als Trockenmahlung in einer Pendelkolbenmühle erfolgte.

Diese Formkörpergrünlinge 10 wiesen jeweils ein Gewicht von ca. 5150 g und einen Restfeuchtegehalt von jeweils ca. 18 Gew.-% auf, bezogen auf das jeweilige Trockengewicht des Formkörpergrünlings 10. Die Formkörpergrünlinge 10 wurden in Form von Dachziegeln (Modell: E58 SL-D) bereitgestellt.

Der Abstand von der einem Betrachter zugewandten Oberfläche des Formkörpergrünlings zu einer gegenüberliegenden Oberfläche des Formkörpergrünlings war ausgewählt aus dem Bereich von 9 mm bis 35 mm, bei senkrechter Betrachtung auf die von dem Formkörpergrünling 10 aufgespannte Frontalebene. Bei senkrechter Betrachtung auf die von einem Formkörpergrünling 10 aufgespannte Frontalebene, weist die laterale Ausdehnung des Formkörpergrünlings Abmessungen von 32 cm x 50 cm auf.

Zur Durchführung des erfindungsgemäßen Verfahrens wurde ein Formkörpergrünling 10 in einer Mikrowellenkammer (Fricke und Mallah Microwave Technology GmbH) angeordnet, welche ein Kammervolumen von 1,7 m³ und vier einzeln ansteuerbaren Magnetrons mit jeweils einer maximalen Mikrowellenleistung von 6 kW aufwies. Anschließend wurde der Formkörpergrünling für 90 min mit einer Mikrowellenleistung von 1300 W und einer Frequenz von 2450 MHz getrocknet, wie in Schritt (b) des erfindungsgemäßen Verfahrens beschrieben. Danach wurde der Formkörpergrünling 10 mit Hochtemperatur-Keramikfasern in Form einer Fasermatte vollständig umhüllt. Die Abmessungen der Hochtemperatur-Keramikfaser-Umhüllung betrugen in der Länge 50 cm, in der Breite 33 cm und in der Höhe 8 cm. Anschließend wurde der Formkörpergrünling 10 gemäß Schritt (c) des erfindungsgemäßen Verfahrens für 235 min mit einer variierenden Mikrowellenleistung zwischen 1700 W bis 4900 W und einer Frequenz von 2450 MHz gebrannt. Im Anschluss wurde die Beaufschlagung mit der Strahlung beendet und der Formkörper zusammen mit der Hochtemperatur-Keramikfaser-Umhüllung zur Abkühlung auf Raumtemperatur für 14 h in der Mikrowellenkammer gelassen. Erhalten wurde der gebrannte keramische Formkörper 1 der im Folgenden als gebrannter keramischer Formkörper "MW2" bezeichnet wird.

Das konventionelle Verfahren zum Erhalt eines gebrannten keramischen Formkörpers wurde mit den gleichen Einstellungen und Vorrichtungen durchgeführt wie bereits hinsichtlich des gebrannten keramischen Formkörpers "T1" durchgeführt. Erhalten wurde ein gebrannter keramischer Formkörper 1 der im Folgenden als gebrannter keramischer Formkörper "T2" bezeichnet wird.

### Beispiel 3: Gebrannte keramische Formkörper "MW3" und "T3"

Eine dritte Formmasse aus der zwei Formkörpergrünlinge bereitgestellt wurden, wies die folgende Zusammensetzung auf, bezogen auf das Trockengewicht des Formkörpergrünlings, auf:

| | |
|---|---|
| Lehm: | 82 Gew.-% |
| Ton: | 18 Gew.-% |
| Zuschläge: | 0 Gew.-% |

Die Formkörpergrünlinge 10 wurden aus der dritten Formmasse bereitgestellt, wie es auch bereits hinsichtlich der ersten Formmasse beschrieben wurde.

Diese Formkörpergrünlinge 10 wiesen jeweils ein Gewicht von ca. 5450 g und einen Restfeuchtegehalt von jeweils ca. 18 Gew.-% auf, bezogen auf jeweilige Trockengewicht des Formkörpergrünlings 10. Die Formkörpergrünlinge 10 wurden in Form von Dachziegeln (Modell: Linea) bereitgestellt.

Der Abstand von der einem Betrachter zugewandten Oberfläche des Formkörpergrünlings zu einer gegenüberliegenden Oberfläche des Formkörpergrünlings war ausgewählt aus dem Bereich von 9 mm bis 35 mm, bei senkrechter Betrachtung auf die von dem Formkörpergrünling 10 aufgespannte Frontalebene. Bei senkrechter Betrachtung auf die von einem Formkörpergrünling 10 aufgespannte Frontalebene, weist die laterale Ausdehnung des Formkörpergrünlings 10 eine Abmessung von 32 cm x 52,5 cm auf.

Zur Durchführung des erfindungsgemäßen Verfahrens wurde ein Formkörpergrünling 10 in einer Mikrowellenkammer (Fricke und Mallah Microwave Technology GmbH) angeordnet, welche ein Kammervolumen von 1,7 m³ und vier einzeln ansteuerbaren Magnetrons mit jeweils einer maximalen Mikrowellenleistung von 6 kW aufwies. Anschließend wurde der Formkörpergrünling für 90 min mit einer Mikrowellenleistung von 1300 W und einer Frequenz von 2450 MHz getrocknet, wie in Schritt (b) des erfindungsgemäßen Verfahrens beschrieben Danach wurde der Formkörpergrünling 10 mit Hochtemperatur-Keramikfasern in Form einer Fasermatte vollständig umhüllt. Die Abmessungen der Hochtemperatur-Keramikfaser-Umhüllung betrugen in der Länge 53 cm, in der Breite 33 cm und in der Höhe 8 cm. Anschließend wurde der Formkörpergrünling 10 gemäß Schritt (c) des erfindungsgemäßen Verfahrens für 242 min mit einer variierenden Mikrowellenleistung zwischen 1750 W bis 4900 W und einer Frequenz von 2450 MHz gebrannt. Im Anschluss wurde die Beaufschlagung mit der Strahlung beendet und der Formkörper zusammen mit der Hochtemperatur-Keramikfaser-Umhüllung zur Abkühlung auf Raumtemperatur für 14 h in der Mikrowellenkammer gelassen. Erhalten wurde der gebrannte keramische Formkörper 1 der im Folgenden als gebrannter keramischer Formkörper "MW3" bezeichnet wird.

Das konventionelle Verfahren zum Erhalt eines gebrannten keramischen Formkörpers wurde mit den gleichen Einstellungen und Vorrichtungen durchgeführt wie bereits hinsichtlich des gebrannten keramischen Formkörpers "T1" durchgeführt. Erhalten wurde ein gebrannter keramischer Formkörper 1 der im Folgenden als gebrannter keramischer Formkörper "T3" bezeichnet wird.

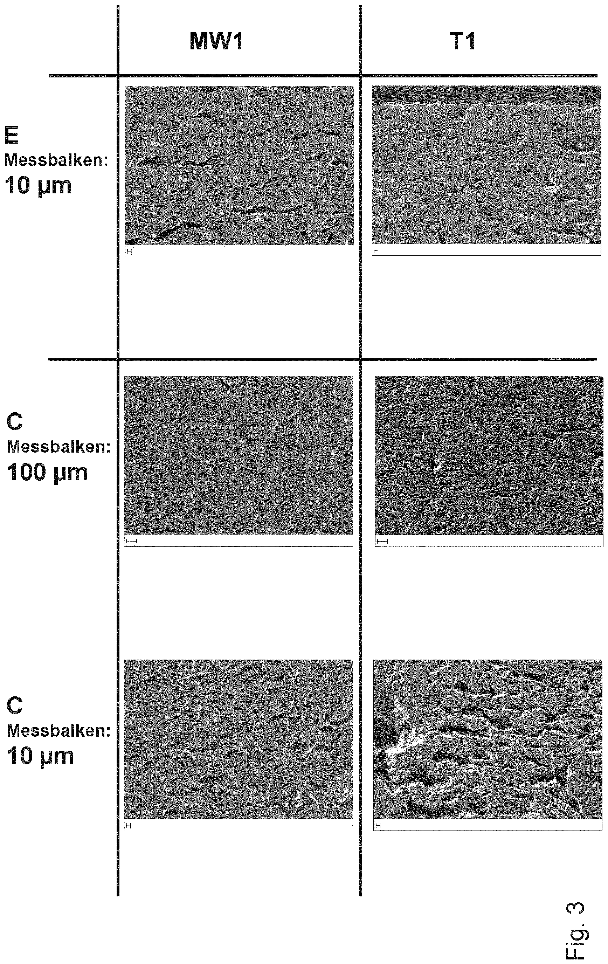

Die gebrannten keramischen Formkörper 1 "MW1" bis "MW3 und "T1" bis "T3" wurden entlang ihrer Frontalebene aufgeschnitten, in Harz eingebettet und deren Schnittflächen poliert. Von den polierten Schnittflächen wurden mittels eines Raster-Elektronen-Mikroskops (REM) (Leo 1530 VP Gemini, Zeiss) Aufnahmen erstellt. In den Tabellen nach Fig. 3 bis Fig. 6 sind die Aufnahmen des direkten Vergleichs der Schnittflächen gezeigt, wobei jeweils die Skalierung des Maßstabsbalkens angegeben ist.

Für die Aufnahmen wurden die folgenden Parameter eingestellt:

| | |
|---|---|
| Magnitude: | 25x, 50x, 100x oder 200x |
| Beschleunigungsspannung: | 12,0 kV |
| Kammerdruck: | Hochvakuum |
| Apertur: | 60 µm |
| Arbeitsabstand: | 10 mm |
| Signal A: | MPSE (engl. "Modified pressure with stored equalization method") |

Des Weiteren wurden von den gebrannten keramischen Formkörpern "MW1" bis "MW3 und "T1" bis "T3" die offene Porosität, und das spezifische Porenvolumen der gebrannten keramischen Formkörper mittels Quecksilber-Porosimetrie bestimmt. Weiter wurde jeweils die mittlere spezifische Porosität über den gesamten Formkörper bestimmt. Außerdem wurde jeweils eine spezifische Porosität des Randbereichs und eine spezifische Porosität des Kernmaterials exemplarisch für die gebrannten keramischen Formkörper "MW1" und "T1" bestimmt. Es wurde die bereits vorstehend beschriebene Methode angewendet.

Von den erhaltenen gebrannten keramischen Formkörpern "MW1", "MW3", "T1" und "T3" wurden exemplarisch jeweils die Kristallphasen des Kernmaterials mittels Röntgendiffraktometrie (XRD) analysiert. Hierzu wurde Proben der Formkörper entnommen und aufgemahlen bis zu volumenäquivalenten Kugeldurchmesser, x₅₀, ₃, von maximal 63 µm. Anschließend wurde die Probe auf einen Probenträger übertragen und in einem Röntgendiffraktometrie (Bruker Corp., Bruker D8 ADVANCE) vermessen.

Des Weiteren wurde die Bruchlast exemplarisch für die gebrannten keramischen Formkörper "MW1" und "T1" mittels der Methode nach DIN EN 538:1994-11 (Englischer Titel "Clay roofing tiles for discontinuous laying - Flexural strength test; German version EN 538:1994", Deutscher Titel: "Tondachziegel für überlappende Verlegung - Prüfung der Biegetragfähigkeit; Deutsche Fassung EN 538:1994", Ausgabedatum: 1994-11) der jeweiligen Formkörper bestimmt.

Die Wasseraufnahme der gebrannten keramischen Formkörper wurde mittels der Methode nach DIN 52251-2:1987-04 (Englischer Titel: "Indirect methods of determining the frost resistance of roofing tiles; determination of water absorption", Deutscher Titel: "Indirekte Prüfverfahren zur Prüfung der Frostwiderstandsfähigkeit von Dachziegeln; Bestimmung der Wasseraufnahme", Ausgabedatum: 1987-04) bestimmt. Hierzu wird zunächst das Trockengewicht einer Probe eines keramischen gebrannten Formkörpers 1 bestimmt. Anschließend wurde die Probe bis zu einem Vakuum von 25 mbar evakuiert. Zu der evakuierten Probe wird unter Vakuum Wasser zugefügt. Nach dem Druckausgleich wird das Nassgewicht der Probe bestimmt und die Differenz zum Trockengewicht berechnet.

### Ergebnis

In Tabelle 1 sind die Ergebnisse der oben beschriebenen Analysen gebrannten keramischen Formkörper "MW1" und "T1" gezeigt. Tabelle 2 zeigt die Ergebnisse für die gebrannten keramischen Formkörper "MW2" und "T2", sowie Tabelle 3 die Ergebnisse für die gebrannten keramischen Formkörper "MW3" und "T3".

**Tabelle 1: Vergleich des erfindungsgemäßen gebrannten keramischen Formkörpers "MW1" und des nach einem konventionellen Verfahren hergestellten gebrannten keramischen Formkörpers "T1"**

| | **Formkörper "T1"** | **Formkörper "MW1"** |
|---|---|---|
| **Wasseraufnahme [Gew.-%]** | 10,8 | 10,3 |
| **Offene Porosität [g/cm³]** | 23,6 | 21,9 |
| **Spezifisches Porenvolumen (Randbereich) [mm³/g]** | 101,3 | 98,3 |
| **Spezifisches Porenvolumen (Kernmaterial) [mm³/g]** | 109,9 | 103,6 |
| **Verhältnis spezifisches Porenvolumen Randbereich zum spezifischen Porenvolumen des Kernmaterials [-]** | 0,922 | 0,949 |
| **Bruchlast [kN]** | 2,94 | 2,98 |

**Tabelle 2: Vergleich des erfindungsgemäßen gebrannten keramischen Formkörpers "MW2" und des nach einem konventionellen Verfahren hergestellten gebrannten keramischen Formkörpers "T2".**

| | **Formkörper "T2"** | **Formkörper "MW2"** |
|---|---|---|
| **Wasseraufnahme [Gew.-%]** | 10,0 | 7,3 |
| **Offene Porosität [g/cm³]** | 21,2 | 16,2 |
| **Spezifisches Porenvolumen (Kernmaterial) [mm³/g]** | 105,5 | 69,8 |

**Tabelle 3: Vergleich des erfindungsgemäßen gebrannten keramischen Formkörpers "MW3" und des nach einem konventionellen Verfahren hergestellten gebrannten keramischen Formkörpers "T3".**

| | **Formkörper "T3"** | **Formkörper "MW3"** |
|---|---|---|
| **Wasseraufnahme [Gew.-%]** | 8,9 | 8,0 |
| **Offene Porosität [g/cm³]** | 18,9 | 17,2 |
| **Spezifisches Porenvolumen (Kernmaterial) [mm³/g]** | 92,4 | 86,2 |

Anhand der vorstehend dargestellten Ergebnisse zeigt sich, dass die ermittelten Werte der offenen Porosität und der spezifischen Porenvolumina der erfindungsgemäßen gebrannten keramischen Formkörper "MW1" bis "MW3" jeweils geringer sind als die des entsprechenden Formkörpers "T1" bis "T3". Auch weisen Formkörper "MW1" bis "MW3" auch jeweils eine geringere Wasseraufnahme auf.

Bei einem Vergleich des spezifischen Porenvolumens des Kernmaterials 3 mit dem des Randbereichs 2 zeigt sich, dass bei dem Formkörper "T1", das spezifische Porenvolumen des Kernmaterials 3 im Vergleich zu dem spezifischen Porenvolumens des Randbereichs um 8,5 % größer ist. Bei dem gebrannten keramischen Formkörper "MW1", hergestellt durch das erfindungsgemäße Verfahren, ist das spezifische Porenvolumen des Kernmaterials 3 lediglich 5,4 % größer ist als das spezifische Porenvolumen des Randbereichs 2. Mit anderen Worten beträgt das Verhältnis des spezifischen Porenvolumens des Randbereichs 2 zu dem spezifischen Porenvolumens des Kernmaterials 3 des gebrannten keramischen Formkörpers "MW1" 0,949, wobei es für den gebrannten keramischen Formkörper "T1" geringer ist mit 0,922.

Auch aus der rein optischen Beurteilung der REM-Aufnahmen von Fig. 3 bis 5 lassen sich die Ergebnisse der vorstehenden Tabellen 1 bis 3 nachvollziehen.

Fig. 3 zeigt die Aufnahmen der gebrannten keramischen Formkörper "MW1" und "T1" angeordnet in einer Tabelle. Die erste Spalte (MW1) der Tabelle zeigt Aufnahmen des gebrannten keramischen Formkörpers "MW1", der gemäß dem erfindungsgemäßen Verfahren mittels Beaufschlagung mit elektromagnetischer Strahlung mit einer Frequenz von maximal 300 GHz gebrannt wurde. Die zweite Spalte (T1) der Tabelle von Fig. 3 zeigt Aufnahmen des gebrannten keramischen Formkörpers "T", der gemäß dem konventionellen Verfahren in einem Tunnelofen gebrannt wurde. Die erste Zeile (E) zeigt eine Aufnahme eines Randbereichs 2 des jeweiligen Verfahrens, wobei der Messbalken jeweils 10 µm beträgt. Hierzu wurde eine Magnitude von 200x verwendet. Die zweite Zeile (C) zeigen Aufnahmen des Kernmaterials 3 des jeweiligen Verfahrens, wobei der Messbalken jeweils 100 µm beträgt. Hierzu wurde eine Magnitude von 500x verwendet. Die dritte Zeile (C) zeigen Aufnahmen des Kernmaterials 3 des jeweiligen Verfahrens, wobei der Messbalken jeweils 10 µm beträgt. Hierzu wurde eine Magnitude von 200x verwendet.

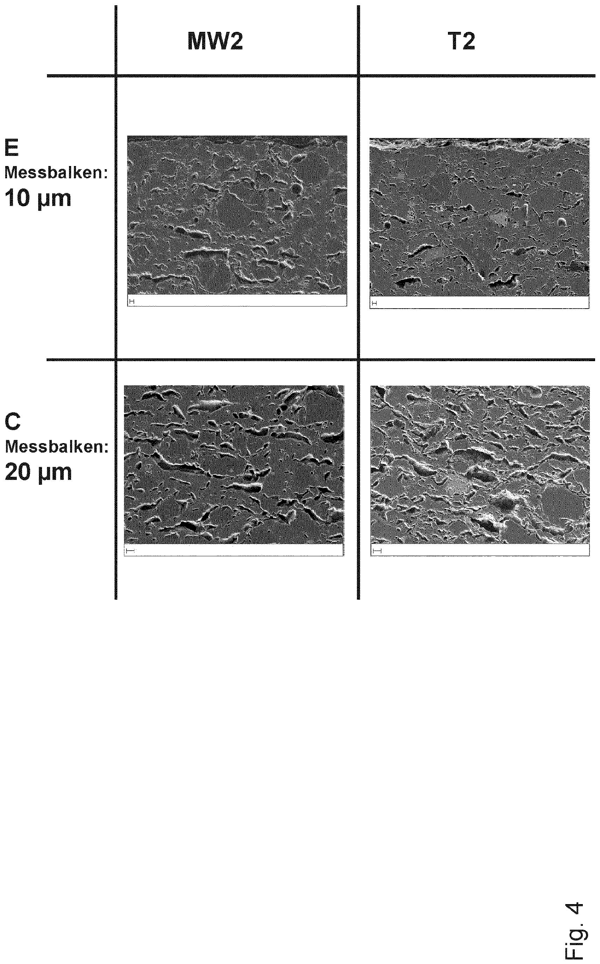

Fig. 4 zeigt die Aufnahmen der gebrannten keramischen Formkörper "MW2" und "T2" in einer Tabelle. Die erste Spalte (MW2) der Tabelle zeigt Aufnahmen des gebrannten keramischen Formkörpers "MW2", der gemäß dem erfindungsgemäßen Verfahren mittels Beaufschlagung mit elektromagnetischer Strahlung mit einer Frequenz von maximal 300 GHz gebrannt wurde. Die zweite Spalte (T2) der Tabelle von Fig. 4 zeigt Aufnahmen des gebrannten keramischen Formkörpers "T2", der gemäß dem konventionellen Verfahren in einem Tunnelofen gebrannt wurde. Die erste Zeile (E) zeigt eine Aufnahme eines Randbereichs 2 des jeweiligen Verfahrens, wobei der Messbalken jeweils 10 µm beträgt. Hierzu wurde eine Magnitude von 200x verwendet. Die zweite Zeile (C) zeigen Aufnahmen des Kernmaterials 3 des jeweiligen Verfahrens, wobei der Messbalken jeweils 20 µm beträgt. Hierzu wurde eine Magnitude von 200x verwendet.

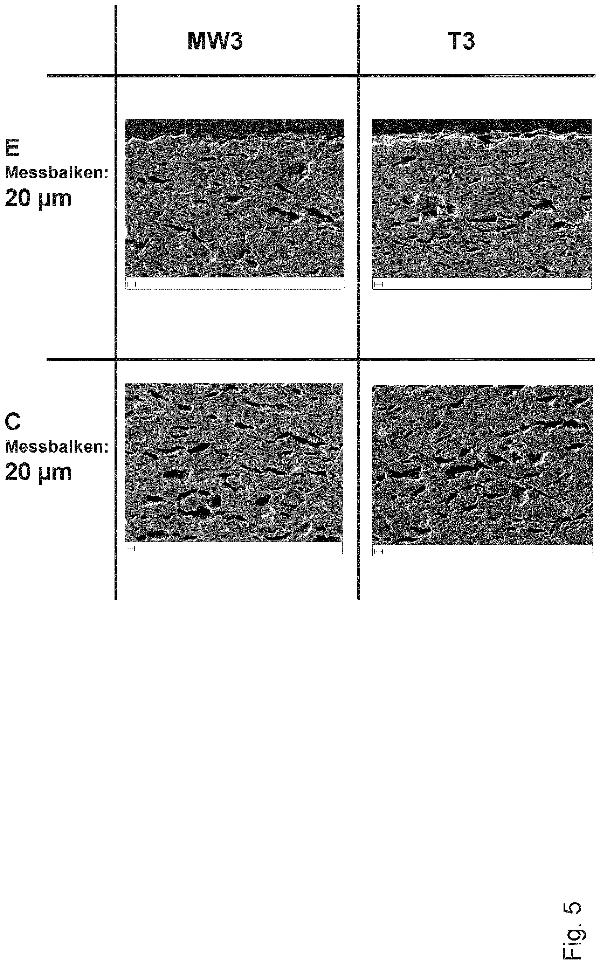

Fig. 5 zeigt die Aufnahmen der gebrannten keramischen Formkörper "MW3" und "T3" in einer Tabelle. Die erste Spalte (MW3) der Tabelle von Fig. 5 zeigt Aufnahmen des gebrannten keramischen Formkörpers "MW3", der gemäß dem erfindungsgemäßen Verfahren mittels Beaufschlagung mit elektromagnetischer Strahlung mit einer Frequenz von maximal 300 GHz gebrannt wurde. Die zweite Spalte (T3) der Tabelle von Fig. 5 zeigt Aufnahmen des gebrannten keramischen Formkörpers "T3", der gemäß dem konventionellen Verfahren mittels Beaufschlagung mit thermischer Strahlung in einem Tunnelofen gebrannt wurde. Die erste Zeile (E) zeigt eine Aufnahme eines Randbereichs 2 des jeweiligen Verfahrens, wobei der Messbalken jeweils 20 µm beträgt. Hierzu wurde eine Magnitude von 200x verwendet. Die zweite Zeile (C) zeigen Aufnahmen des Kernmaterials 3 des jeweiligen Verfahrens, wobei der Messbalken jeweils 20 µm beträgt. Hierzu wurde eine Magnitude von 200x verwendet.

Weiter wurde für den gebrannten keramischen Formkörper "MW2" und "T2" exemplarisch die Porenlänge und die Porenbreite jeweils für den Randbereich 2 und das Kernmaterial 3 aus den REM-Aufnahmen der Schnittflächen bestimmt. Dies erfolgte durch eine händische Vermessung einer Auswahl von zumindest sieben Poren mittels der Auswertesoftware des REM. Es zeigt sich, dass für den gebrannten keramischen Formkörper "T2" die mittlere Porenlänge des Kernmaterials 143 % der Porenlänge des Randbereichs 2 beträgt. Die mittlere Porenbreite des Kernmaterials 3 beträgt 166 % des Randbereichs 2. Für den gebrannten keramischen Formkörper "MW2" beträgt die mittlere Porenlänge des Kernmaterials 3 114 % der Porenlänge des Randbereichs 2. Die mittlere Porenbreite des Kernmaterials 3 beträgt 113 % des Randbereichs 2. So zeigt sich auch hier, dass der gebrannte keramische Formkörper "MW2" über den gesamten Formkörper verteilt eine einheitlichere Struktur aufweist.

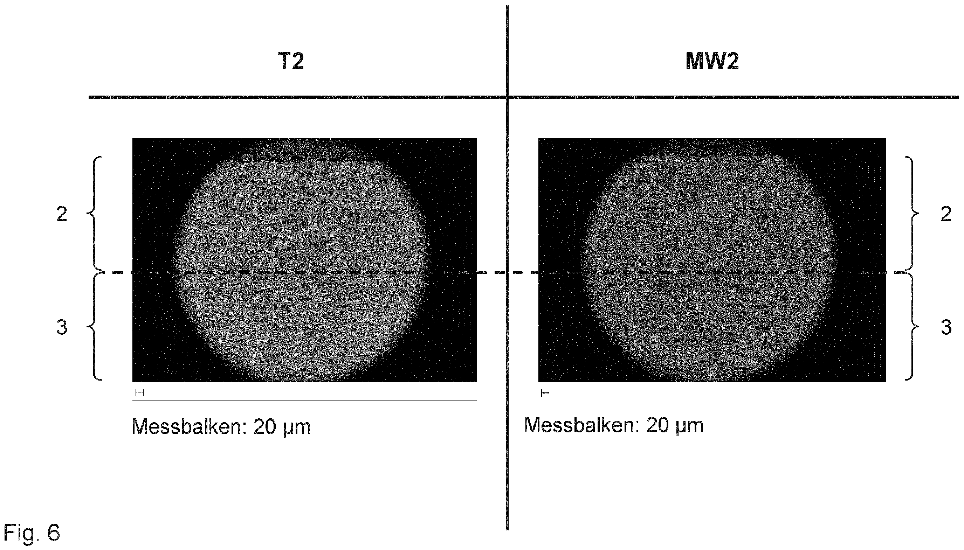

Fig. 6 zeigt weitere Aufnahmen der gebrannten keramischen Formkörper "MW2" und "T2" bei einer Magnitude von 25x, so dass der Messbalken jeweils 100 µm beträgt. Die gestrichelte Linie zeigt exemplarisch den Übergang von einem Randbereich 2 zu dem Kernmaterial 3. Am oberen Rand ist die Oberfläche des jeweiligen Formkörpers 1 erkennbar. Insbesondere bei dem gebrannten keramischen Formkörper "T2", der mittels eines konventionellen Verfahrens gebrannt wurde, ist ein struktureller Unterschied zwischen Randbereich 2 und Kernmaterial 3 bereits mit bloßem Auge zuerkennen. Im Kernmaterial 3 weist der Formkörper "T2" größere Poren auf, als im Randbereich 2. Der Übergang von dem Material des Randbereichs 2 zu dem Material des Kernmaterials 3 erfolgt bei Betrachtung senkrecht auf die Oberfläche in dem Formkörper "T2" in einem Bereich der 1,5 mm bis 2 mm von der Oberfläche entfernt angeordnet ist. Im Gegensatz hierzu weist der gebrannte keramische Formkörper "MW2" keine deutlichen strukturellen Unterschiede zwischen Kernmaterial 3 und Randbereich 2 auf, sondern eine über den gesamten Formkörper im Wesentlichen gleichmäßige Struktur.

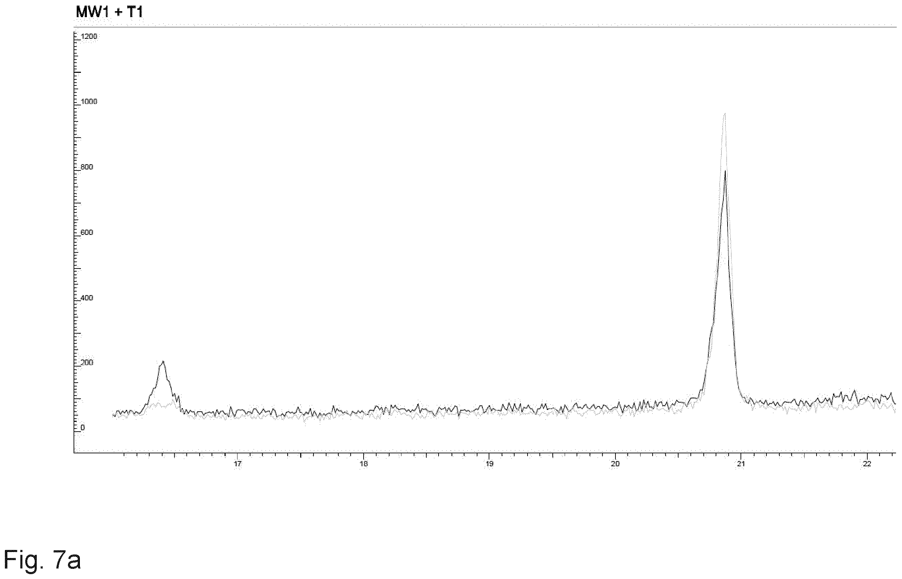

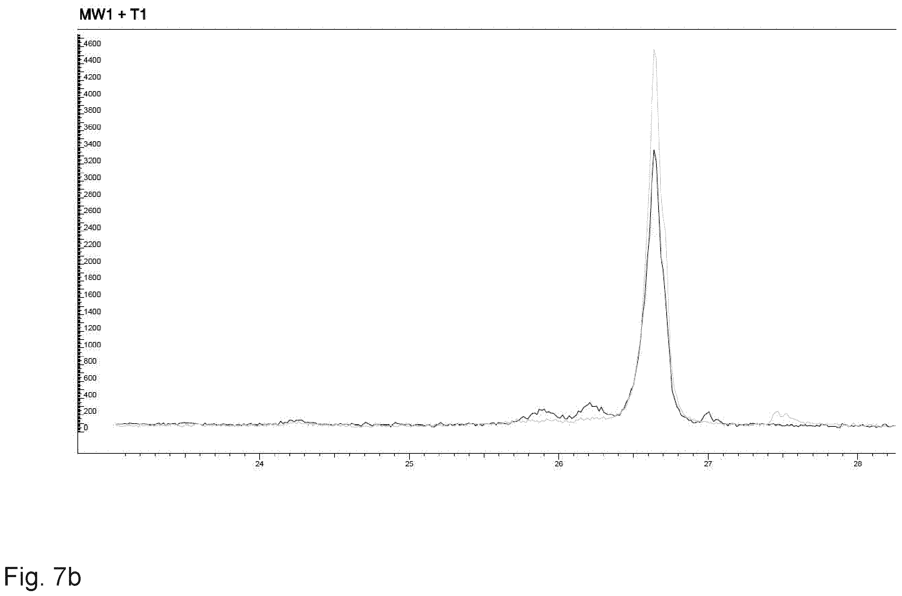

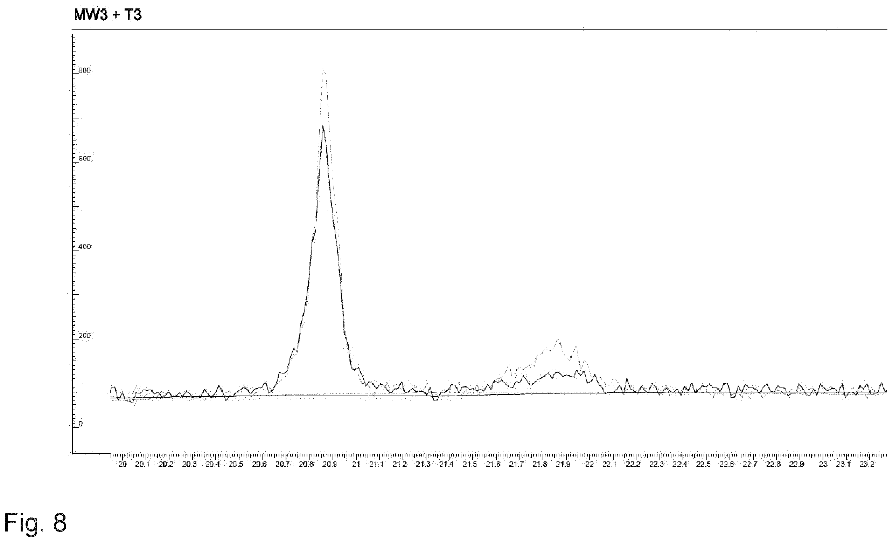

Diffraktogramme der gebrannten keramischen Formkörper "MW1" und "T1" sind in den Fig. 7a bis 7b gezeigt. In Fig. 8 ist das Diffraktogramm des gebrannten keramischen Formkörper "MW3" und "T3" und eine Basislinie gezeigt. Es sind die Intensitäten der Beugungsreflexe über dem Beugungswinkel 2*θ* aufgetragen. Die Figuren sind auf die als aussagekräftig empfundenen Beugungswinkel 2*θ* beschränkt. In Fig. 7a sind aufgetragen die Beugungswinkel 2*θ* von 16° bis 23, in Fig. 7b die Beugungswinkel 2*θ* von 23° bis 28 und in Fig. 8 die Beugungswinkel 2*θ* von 20° bis 23°. Die schwarze durchgehende Linie ist dem Diffraktogramm des gebrannten keramischen Formkörper "MW1" bzw. "MW3" und die graue durchgehende Linie dem gebrannten keramischen Formkörper "T1" bzw. "T3" zugeordnet.

Die XRD-Analysen zeigen in dem Diffraktogramm von Fig. 7a bei den Winkeln 2θ von 16,4° und 20,8° deutliche Signale. In dem Diffraktogramm von Fig. 7b sind weitere Signale bei den Winkeln 2θ von 25,9°, 26,2° und 26,6° gezeigt. Die Signale bei einem Winkel 2θ von 16,4°, 25,9 und 26,2° sind einer Kristallphase von Mullit zuzuordnen. Die Signale bei einem Winkel 2θ von 20,8° und 26,6°sind einer Kristallphase von Quarz zuzuordnen.

Die XRD-Analysen zeigen in dem Diffraktogramm von Fig. 8 bei den Winkeln 2θ von 20,8° und 21,9° deutliche Signale. Das Signal bei einem Winkel 2θ von 20,8 ° ist wieder der Kristallphase von Quarz zuzuordnen, das Signal bei einem Winkel 2θ von 21,9° ist einer Kristallphase von Cristobalit zuzuordnen.

Der gebrannte keramische Formkörper "MW1" zeigt deutliche Signale für eine Mullit-Kristallphase, wobei für den gebrannten keramischen Formkörper "T1" diese Signale lediglich sehr schwach ausgeprägt sind. Der gebrannte keramische Formkörper "T1" weist jedoch einen größeren Anteil einer Quarz-Kristallphase auf.

Die Diffraktogramme zeigen somit, dass bei einem Brennverfahren mittels Beaufschlagung mit elektromagnetischer Strahlung mit einer Frequenz von maximal 300 GHz sich bereits eine deutliche Kristallphase Mullit ausbildet, die ansonsten erst bei Temperaturen von 1190 °C auftritt. Bei einem konventionellen Brennverfahren überwiegt eine Quarzphase, die sich auch schon bei geringeren Temperaturen ausbildet.

Der gebrannte keramische Formkörper "T3" zeigt ein deutliches Signal für eine Cristobalit-Phase bei 21,9°. Dieses Signal ist für den gebrannten keramischen Formkörper "MW3" lediglich sehr schwach ausgebildet. Dies ist damit zu erklären, dass sich Cristobalit erst bei den längeren Haltezeit bei hoher Temperatur im Tunnelofen ausbildet, jedoch noch nicht bei der kürzeren Brenndauer in der Mikrowelle. Die hinsichtlich des gebrannten keramischen Formkörpers "T1" angeführte Quarzphase ist auch bei dem gebrannten keramischen Formkörper "T3" stärker ausgeprägt als bei dem gebrannten keramischen Formkörper "MW3".

Da die vorstehenden Formkörpergrünlinge 10 aus der gleichen Formmasse bereitgestellt wurden, und somit über eine identische Massenzusammensetzung verfügen, ist der strukturelle Unterschied bspw. in der Porenverteilung und oder in den Kristallphasen der gebrannten keramischen Formkörper 1 prozessbedingt.

Diese strukturellen Unterschiede lassen sich vermutlich durch einen höheren Energieeintrag durch das Brennen mittels Beaufschlagung mit der elektromagnetischen Strahlung erklären. Durch die Beaufschlagung des Formkörpergrünlings 10 mit elektromagnetischer Strahlung wird im Vergleich zu der rein thermischen Strahlung des Tunnelofens ein schnelleres Aufheizen des Formkörpers 1, insbesondere des Kernmaterials 3, erreicht. Das Kernmaterial weist vermutlich auch am Ende des Brennvorgangs höhere Temperaturen auf. Dies führt zu anderen Phasenreaktionen, wie beispielsweise die Bildung von Mullit.

Weiter weist die Formmasse Feldspäte wie bspw. Kalifeldspat oder Natriumfeldspat auf. Beispielsweise kann Feldspat ein Bestandteil des eingesetzten Lehms und/oder Tons sein oder als Zuschlagstoff zugesetzt werden. In einer Formmasse wirken die Feldspäte wie ein Flussmittel. Das heißt sie führen dazu, dass zu einem früheren Zeitraum des Verfahrens bzw. bei niedrigerer Temperatur im Formkörper 1 eine Schmelzphase auftritt. Durch das schnellere Aufheizen des Formkörpers 1, insbesondere des Kernmaterials 3, mittels Beaufschlagung mit elektromagnetischer Strahlung im Vergleich zu rein thermischer Strahlung, ist es möglich, dass eine reine Feldspatschmelze entsteht. Zu diesem Zeitpunkt sind andere Bestandteile, wie z. B. Quarz, anteilig nur gering gelöst. Die reine Feldspatschmelze weist eine relativ gesehen geringe Viskosität auf, so dass diese in Zwischenräume fließen kann. Zusätzlich können weitere Bestandteile wie CaO die Viskosität weiter erniedrigen, so dass der Effekt noch verstärkt wird.

Die niedrige Viskosität der Schmelzphase bzw. das Ausfüllen von Zwischenräumen führt zu einer höheren Schwindung und Materialverdichtung des Formkörpers 1 und somit zu einer geringeren Porosität. Hiervon ist jedoch die Bruchlast nicht Wesentlich beeinflusst.

Somit kann durch ein Herstellungsverfahren umfassend einen Brennvorgang mittels Beaufschlagung mit elektromagnetischer Strahlung ein gebrannter keramische Formkörper 1 erhalten werden, der sich strukturell von einem Formkörpern 1 hergestellt durch konventionelle Brennverfahren unterscheidet, jedoch keine schlechteren mechanischen Eigenschaften aufweist. Vielmehr weist ein erfindungsgemäßer gebrannter keramischer Formkörper 1 aufgrund des effizienteren und schnelleren Herstellungsverfahrens einen geringeren CO₂-Fussabdruck auf.

Selbstverständlich können die vorstehend aufgeführten Ausführungsvarianten, insbesondere der Verfahrensschritte und Materialzusammensetzungen der Formkörper, beliebig miteinander kombiniert werden und stellen keine Limitierung, insbesondere in ihrer Formgebung und Kombination, dar.

### Bezugszeichenliste

- 1: Formkörper
- 2: Randbereich
- 3: Kernmaterial
- 4: Mikrowellen-Suszeptor-Partikel
- 10: Formkörpergrünling

## Patentansprüche

1. Gebrannter keramischer Formkörper (1), wobei der gebrannte keramische Formkörper (1) ein Kernmaterial (3) und einen das Kernmaterial (3) vollständig umschließenden Randbereich (2) aufweist,
**dadurch gekennzeichnet, dass**
das Kernmaterial (3) und der Randbereich (2) ein spezifisches Porenvolumen aufweist, wobei das spezifische Porenvolumen des Kernmaterials (3) um nicht mehr als 8 %, vorzugsweise um nicht mehr als 6 %, größer ist als das spezifische Porenvolumen des Randbereichs (2), wobei das spezifische Porenvolumen jeweils durch eine Methode nach DIN ISO 15901-1:2019-03 bestimmt wird, wobei der gebrannte keramische Formkörper (1) eine Grobkeramik ist, wobei
der gebrannte keramische Formkörper (1) aus gebranntem Ton und/oder gebranntem Lehm und/oder Schamotte gebildet ist.

2. Gebrannter keramischer Formkörper (1) nach Anspruch 1,
**dadurch gekennzeichnet, dass**
das Verhältnis des spezifischen Porenvolumens des Randbereichs (2) zu dem spezifischen Porenvolumen des Kernmaterials (3) des gebrannten keramischen Formkörpers (1) größer ist als 0,925, bevorzugt größer ist als 0,945.

3. Gebrannter keramischer Formkörper (1) nach einem der vorstehenden Ansprüche,
**dadurch gekennzeichnet, dass**
dass der gebrannte keramische Formkörper (1) ein spezifisches Porenvolumen im Kernmaterial (3), von höchstens 110 mm³/g aufweist, bestimmt durch eine Methode nach DIN ISO 15901-1:2019-03.

4. Gebrannter keramischer Formkörper nach einem der vorstehenden Ansprüche, **dadurch gekennzeichnet, dass**
der gebrannte keramische Formkörper (1) zumindest einen Mikrowellen-Suszeptor (4) umfasst, der homogen verteilt im gebrannten keramischen Formkörper (1) angeordnet ist.

5. Gebrannter keramischer Formkörper (1) nach einem der vorstehenden Ansprüche,
**dadurch gekennzeichnet, dass**
der gebrannte keramische Formkörper (1) auf wenigstens einem Teilbereich wenigstens einer Oberfläche oder vollflächig auf der gesamten Oberfläche wenigstens eine Oberflächenbeschichtung aufweist, wobei insbesondere die wenigstens eine Oberflächenbeschichtung eine luftreinigende Oberflächenbeschichtung und/oder eine selbstreinigende Oberflächenbeschichtung ist.

6. Gebrannter keramischer Formkörper (1) nach einem der vorstehenden Ansprüche,
**dadurch gekennzeichnet, dass**
bei senkrechter Betrachtung auf eine von dem gebrannten keramischen Formkörper (1) aufgespannte Frontalebene der Abstand von der einem Betrachter zugewandten Oberfläche zu einer gegenüberliegenden Oberfläche des Formkörpers in einem Bereich von 6 mm bis 365 mm liegt,
und/oder
dass eine laterale Ausdehnung des gebrannten keramischen Formkörpers (1) in zumindest eine Richtung entlang einer vom gebrannten keramischen Formkörper (1) aufgespannten Frontalebene wenigstens 11 cm beträgt.

7. Gebrannter keramischer Formkörper (1) nach einem der vorstehenden Ansprüche,
**dadurch gekennzeichnet, dass**
der gebrannte keramische Formkörper (1) ein Dachziegel, eine Fassadenplatte, eine Muffe, ein Klinkerstein, ein Ziegelstein, ein Schamottestein oder ein Schornsteinelement ist.

8. Verfahren zur Herstellung eines gebrannten keramischen Formkörpers (1), wobei das Verfahren folgende Schritte umfasst:
(a) Bereitstellen wenigstens eines Formkörpergrünlings (10), wobei der Formkörpergrünling (10) formstabil ist und auf ungebranntem Lehm und/oder ungebranntem Ton basiert,
(b) optional Trocknen des wenigstens einen Formkörpergrünlings (10) unter Erhalt eines zumindest teilweise getrockneten Formkörpergrünlings (10), und
(c) Brennen des, optional in Schritt (b) erhaltenen wenigstens einen zumindest teilweise getrockneten, Formkörpergrünlings (10) unter Erhalt wenigstens eines gebrannten keramischen Formkörpers,
**dadurch gekennzeichnet, dass**
zumindest das Brennen des Formkörpergrünlings (10) in Schritt (c) unter Beaufschlagen des wenigstens einen Formkörpergrünlings (10) mit elektromagnetischer Strahlung mit einer Frequenz aus einem Bereich von 300 MHz bis 300 GHz durchgeführt wird, wobei Schritt (c) in einem Temperaturbereich durchgeführt wird, in dem der gebrannte keramische Formkörper am Ende von Schritt (c) zumindest teilweise eine Oberflächentemperatur aus einem Bereich von 900 °C bis 1400 °C aufweist, wobei der gebrannte keramische Formkörper (1) eine Grobkeramik ist, wobei der gebrannte keramische Formkörper (1) ein Kernmaterial (3) und einen das Kernmaterial (3) vollständig umschließenden Randbereich (2) aufweist und wobei das Kernmaterial (3) und der Randbereich (2) ein spezifisches Porenvolumen aufweist, wobei das spezifische Porenvolumen des Kernmaterials (3) um nicht mehr als 8 %, vorzugsweise um nicht mehr als 6 %, größer ist als das spezifische Porenvolumen des Randbereichs (2), wobei das spezifische Porenvolumen jeweils durch eine Methode nach DIN ISO 15901-1:2019-03 bestimmt wird.

9. Verfahren nach Anspruch 8,
**dadurch gekennzeichnet, dass**
der wenigstens eine Formkörpergrünling (10) in Schritt (c) mit einer elektromagnetischen Strahlung mit einer mittleren Leistungsdichte von wenigstens 600 W/kg beaufschlagt wird, bezogen auf die Masse des zu Beginn von Schritt (c) vorliegenden wenigstens einen Formkörpergrünlings (10).

10. Verfahren nach einem der Ansprüche 8 oder 9,
**dadurch gekennzeichnet, dass**
der wenigstens eine in Schritt (a) bereitgestellte Formkörpergrünling (10) in Schritt (b) unter Beaufschlagen mit elektromagnetischer Strahlung mit einer Frequenz von maximal 300 GHz getrocknet wird,
und/oder
dass in Schritt (b) zusätzlich Gas, vorzugsweise heißes Gas mit einer Temperatur von wenigstens 80 °C zugeführt wird.

11. Verfahren nach Ansprüchen 8 bis 10,
**dadurch gekennzeichnet, dass**
der wenigstens eine Formkörpergrünling (10) in Schritt (b) mit elektromagnetischer Strahlung für einen Zeitraum von wenigstens 30 min beaufschlagt wird,
und/oder
dass der wenigstens eine Formkörpergrünling (10) in Schritt (c) mit elektromagnetischer Strahlung für einen Zeitraum von wenigstens 15 min beaufschlagt wird.

12. Verfahren nach einem der Ansprüche 8 bis 11,
**dadurch gekennzeichnet, dass**
der wenigstens eine Formkörpergrünling (10), zumindest zu Beginn von Schritt (c), mit wenigstens einer Umhüllung umhüllt wird, wobei die Umhüllung gegenüber elektromagnetischer Strahlung zu mindestens 20% durchlässig, ist und eine Wärmeleitfähigkeit von maximal 0,30 W/(m·K) aufweist, und wobei die Umhüllung vorzugsweise in Bezug auf den Formkörpergrünling (10) eine stützende und/oder unterstützende Funktion aufweist.

13. Verfahren nach einem der Ansprüche 8 bis 12,
**dadurch gekennzeichnet, dass**
der in Schritt (a) bereitgestellte wenigstens eine Formkörpergrünling (10) wenigstens einen Mikrowellen-Suszeptor (4) umfasst, vorzugsweise in einem Anteil von maximal 10 Gew.-% , bezogen auf das Trockengewicht des in Schritt (a) bereitgestellten Formkörpergrünlings (10).

14. Verfahren nach einem der Ansprüche 8 bis 13,
**dadurch gekennzeichnet, dass**
der wenigstens eine Formkörpergrünling (10) in Schritt (b) angefeuchtet wird, wobei die Feuchtigkeit des Formkörpergrünlings (10) und/oder des Umgebungsvolumens, beispielsweise durch Sättigung mit Dampf der den Formkörpergrünling (10) umgebenden Gasphase, eingestellt wird.

15. Verfahren nach einem der Ansprüche 8 bis 14,
**dadurch gekennzeichnet, dass**
das Verfahren kontinuierlich betrieben wird.

16. Verfahren nach einem der Ansprüche 8 bis 15,
**dadurch gekennzeichnet, dass**
auf wenigstens einem Teilbereich wenigstens einer Oberfläche des wenigstens einen Formkörpergrünlings (10) nach Schritt (a), des wenigstens einen zumindest teilweise getrockneten Formkörpergrünlings (10) nach Schritt (b) oder des wenigstens einen gebrannten keramischen Formkörpers (1) nach Schritt (c) wenigstens eine Oberflächenbeschichtung. aufgebracht wird.

## Claims

1. Fired ceramic shaped body (1), wherein the fired ceramic shaped body (1) comprises a core material (3) and an edge region (2) completely encompassing the core material (3),
**characterized in that**
the core material (3) and the edge region (2) have a specific pore volume, wherein the specific pore volume of the core material (3) is not more than 8%, preferably not more than 6%, greater than the specific pore volume of the edge region (2), wherein the specific pore volume is in each case determined by a method according to DIN ISO 15901-1:2019-03, wherein the fired ceramic shaped body (1) is a coarse ceramic, wherein
the fired ceramic shaped body (1) is formed from fired clay and/or fired loam and/or grog.

2. Fired ceramic shaped body (1) according to Claim 1,
**characterized in that**
the ratio of the specific pore volume of the edge region (2) to the specific pore volume of the core material (3) of the fired ceramic shaped body (1) is greater than 0.925, preferably greater than 0.945.

3. Fired ceramic shaped body (1) according to any of the preceding claims,
**characterized in that**
the fired ceramic shaped body (1) has a specific pore volume in the core material (3) of at most 110 mm³/g determined by a method according to DIN ISO 15901-1:2019-03.

4. Fired ceramic shaped body according to any of the preceding claims,
**characterized in that**
the fired ceramic shaped body (1) comprises at least one microwave susceptor (4) which is arranged homogeneously distributed in the fired ceramic shaped body (1).

5. Fired ceramic shaped body (1) according to any of the preceding claims,
**characterized in that**
the fired ceramic shaped body (1) comprises on at least a subregion of at least one surface or all over the surface at least one surface coating, wherein in particular the at least one surface coating is an air-cleaning surface coating and/or a self-cleaning surface coating.

6. Fired ceramic shaped body (1) according to any of the preceding claims,
**characterized in that**
upon perpendicular observation of a frontal plane spanned by the fired ceramic shaped body (1) the distance from the surface facing an observer to an opposite surface of the shaped body is in a range from 6 mm to 365 mm and/or
**in that** a lateral extent of the fired ceramic shaped body (1) in at least one direction along a frontal plane spanned by the fired ceramic shaped body (1) is at least 11 cm.

7. Fired ceramic shaped body (1) according to any of the preceding claims,
**characterized in that**
the fired ceramic shaped body (1) is a roof tile, a façade panel, a sleeve, a clinker brick, a brick, a grog brick or a chimney element.

8. Process for producing a fired ceramic shaped body (1), wherein the process comprises the steps of:
(a) providing at least one green shaped body (10), wherein the green shaped body (10) is dimensionally stable and based on unfired loam and/or unfired clay,
(b) optionally drying the at least one green shaped body (10) to obtain an at least partially dried green shaped body (10) and
(c) firing the at least one at least partially dried green shaped body (10) optionally obtained in step (b) to obtain at least one fired ceramic shaped body,
**characterized in that**
at least the firing of the green shaped body (10) in step (c) is performed by subjecting the at least one green shaped body (10) to electromagnetic radiation having a frequency in a range from 300 MHz to 300 GHz, wherein step (c) is performed in a temperature range in which at the end of step (c) the fired ceramic shaped body at least partially has a surface temperature in a range from 900°C to 1400°C, wherein the fired ceramic shaped body (1) is a coarse ceramic, wherein the fired ceramic shaped body (1) has a core material (3) and an edge region (2) completely encompassing the core material (3) and wherein the core material (3) and the edge region (2) have a specific pore volume, wherein the specific pore volume of the core material (3) is not more than 8%, preferably not more than 6%, greater than the specific pore volume of the edge region (2), wherein the specific pore volume is in each case determined by a method according to DIN ISO 15901-1:2019-03.

9. Process according to Claim 8,
**characterized in that**
in step (c) the at least one green shaped body (10) is subjected to an electromagnetic radiation having an average power density of at least 600 W/kg based on the mass of the at least one green shaped body (10) present at commencement of step (c).

10. Process according to either of Claims 8 or 9,
**characterized in that**
in step (b) the at least one green shaped body (10) provided in step (a) is dried by subjecting it to electromagnetic radiation having a frequency of at most 300 GHz,
and/or
**in that** in step (b) additional gas, preferably hot gas having a temperature of at least 80°C, is supplied.

11. Process according to Claims 8 to 10,
**characterized in that**
in step (b) the at least one green shaped body (10) is subjected to electromagnetic radiation for a period of at least 30 min and/or
**in that** in step (c) the at least one green shaped body (10) is subjected to electromagnetic radiation for a period of at least 15 min.

12. Process according to any of Claims 8 to 11,
**characterized in that**
at least at commencement of step (c) the at least one green shaped body (10) is coated with at least one coating, wherein the coating is permeable to electromagnetic radiation to an extent of at least 20% and has a thermal conductivity of at most 0.30 W/(m·K) and wherein the coating preferably has a stabilizing and/or supporting function in respect of the green shaped body (10).

13. Process according to any of Claims 8 to 12, **characterized in that**
the at least one green shaped body (10) provided in step (a) comprises at least one microwave susceptor (4), preferably in a proportion of at most 10% by weight based on the dry weight of the green shaped body (10) provided in step (a).

14. Process according to any of Claims 8 to 13,
**characterized in that**
in step (b) the at least one green shaped body (10) is moistened,
wherein the moistness of the green shaped body (10) and/or of the surrounding volume is adjusted for example by saturating the gas phase surrounding the green shaped body (10) with steam.

15. Process according to any of Claims 8 to 14,
**characterized in that**
the process is operated in continuous fashion.

16. Process according to any of Claims 8 to 15,
**characterized in that**
at least one surface coating is applied to at least a subregion of at least one surface of the at least one green shaped body (10) after step (a), of the at least one at least partially dried green shaped body (10) after step (b) or of the at least one fired ceramic shaped body (1) after step (c).

## Revendications

1. Pièce moulée en céramique cuite (1), dans laquelle la pièce moulée en céramique cuite (1) comprend un matériau de coeur (3) et une partie de bord (2) entourant entièrement le matériau de coeur (3),
**caractérisée en ce que**
le matériau de coeur (3) et la partie de bord (2) présentent un volume poreux spécifique, dans laquelle le volume poreux spécifique du matériau de coeur (3) est supérieure de pas plus de 8 %, de préférence pas plus de 6 % au volume poreux spécifique de la partie de bord (2), dans laquelle le volume poreux spécifique est déterminé respectivement à l'aide d'une méthode selon DIN ISO 15901-1:2019-03, dans laquelle la pièce moulée en céramique cuite (1) est une céramique grossière, dans laquelle la pièce moulée en céramique cuite (1) est constituée d'argile cuite et/ou de glaise cuite et/ou d'argile réfractaire.

2. Pièce moulée en céramique cuite (1) selon la revendication 1,
**caractérisée en ce que**
le rapport entre le volume poreux spécifique de la partie de bord (2) et le volume poreux spécifique de matériau de coeur (3) de la pièce moulée en céramique cuite (1) est supérieur à 0,925, de préférence supérieur à 0,945.

3. Pièce moulée en céramique cuite (1) selon l'une des revendications précédentes,
**caractérisée en ce que**
la pièce moulée en céramique cuite (1) présente un volume poreux spécifique dans le matériau de coeur (3) de 110 mm³/g maximum, déterminé à l'aide d'une méthode selon DIN ISO 15901-1:2019-03.

4. Pièce moulée en céramique cuite (1) selon l'une des revendications précédentes,
**caractérisée en ce que**
la pièce moulée en céramique cuite (1) comprend au moins un suscepteur à micro-ondes (4) qui est disposé de manière répartie uniformément dans la pièce moulée en céramique cuite (1).

5. Pièce moulée en céramique cuite (1) selon l'une des revendications précédentes,
**caractérisée en ce que**
la pièce moulée en céramique cuite (1) comprend, sur au moins une partie d'au moins une surface ou sur toute la surface, au moins un revêtement de surface, dans laquelle, plus particulièrement, l'au moins un revêtement de surface est un revêtement de surface purifiant l'air et/ou un revêtement de surface auto-nettoyant.

6. Pièce moulée en céramique cuite (1) selon l'une des revendications précédentes,
**caractérisée en ce que**
en vue verticale d'un plan frontal formé par la pièce moulée en céramique cuite (1), la distance entre une surface orientée vers un observateur et une surface opposée de la pièce moulée est de l'ordre de 6 mm à 365 mm,
et/ou
une extension latérale de la pièce moulée en céramique cuite (1) dans au moins une direction le long d'un plan frontal formé par la pièce moulée en céramique cuite (1) est d'au moins 11 cm.

7. Pièce moulée en céramique cuite (1) selon l'une des revendications précédentes,
**caractérisée en ce que**
la pièce moulée en céramique cuite (1) est une tuile de toit, une plaque de façade, un manchon, du clinker, une brique, une brique réfractaire ou un élément de cheminée.

8. Procédé de fabrication d'une pièce moulée en céramique cuite (1), dans lequel le procédé comprend les étapes suivantes :
(a) mise à disposition d'au moins un corps vert de pièce moulée (10), dans lequel le corps vert de pièce moulée (10) est indéformable et est constitué de glaise non cuite et/ou d'argile non cuite,
(b) séchage optionnel de l'au moins un corps vert de pièce moulée (10), obtenant ainsi un corps vert de pièce moulée (10) au moins partiellement séché et
(c) cuisson de l'au moins un corps vert de pièce moulée (10) au moins partiellement séché, obtenu en option à l'étape (b), obtenant ainsi au moins une pièce moulée en céramique cuite,
**caractérisé en ce que**
au moins la cuisson du corps vert de pièce moulée (10) à l'étape (c) est effectuée en irradiant l'au moins un corps vert de pièce moulée (10) à l'aide d'un rayonnement électromagnétique avec une fréquence dans une plage de 300 MHz à 300 GHz, dans lequel l'étape (c) est exécutée dans une plage de température dans laquelle la pièce moulée en céramique cuite présente, à la fin de l'étape (c), au moins partiellement une température superficielle dans une plage de 900 °C à 1 400 °C, dans lequel la pièce moulée en céramique cuite (1) est une céramique grossière, dans lequel la pièce moulée en céramique cuite (1) comprend un matériau de coeur (3) et une partie de bord (2) entourant entièrement le matériau de coeur (3) et dans lequel le matériau de coeur (3) et le matériau de coeur (3) et la partie de bord (2) présentent un volume poreux spécifique, dans lequel le volume poreux spécifique du matériau de coeur (3) est supérieure de pas plus de 8 %, de préférence de pas plus de 6 %, au volume poreux spécifique de la partie de bord (2), dans lequel le volume poreux spécifique est déterminé respectivement à l'aide d'une méthode selon DIN ISO 15901-1:2019-03.

9. Procédé selon la revendication 8,
**caractérisé en ce que**
l'au moins un corps vert de pièce moulée (10) est irradié à l'étape (c) avec un rayonnement électromagnétique avec une densité de puissance moyenne d'au moins 600 W/kg, par rapport à la masse de l'au moins un corps vert de pièce moulée (10) existant au début de l'étape (c).

10. Procédé selon la revendication 8 ou 9,
**caractérisé en ce que**
l'au moins un corps vert de pièce moulée (10) mis à disposition à l'étape (a) est séché à l'étape (b) à l'aide d'une irradiation au moyen d'un rayonnement électromagnétique avec une fréquence de 300 GHz maximum,
et/ou
à l'étape (b), du gaz est introduit, de préférence du gaz chaud avec une température d'au moins 80 °C.

11. Procédé selon l'une des revendications 8 à 10,
**caractérisé en ce que**
l'au moins un corps vert de pièce moulée (10) est irradié à l'étape (b) avec un rayonnement électromagnétique pendant une période d'au moins 30 min,
et/ou
l'au moins un corps vert de pièce moulée (10) est irradié à l'étape (c) avec un rayonnement électromagnétique pendant une période d'au moins 15 min.

12. Procédé selon l'une des revendications 8 à 11,
**caractérisé en ce que**
l'au moins un corps vert de pièce moulée (10), au moins au début de l'étape (c), est enveloppée d'au moins une enveloppe, dans lequel l'enveloppe est perméable à au moins 20 % vis-à-vis des rayonnements électromagnétiques et présente une conductivité thermique de 0,30 W/(m.K) maximum et dans lequel l'enveloppe remplit, de préférence vis-à-vis du corps vert de pièce moulée (10), une fonction de support et/ou de soutien.

13. Procédé selon l'une des revendications 8 à 12,
**caractérisé en ce que**
l'au moins un corps vert de pièce moulée (10) mis à disposition à l'étape (a) comprend au moins un suscepteur à micro-ondes (4), de préférence dans une proportion de 10 % en poids maximum, par rapport au poids sec du corps vert de pièce moulée (10) mis à disposition à l'étape (a).

14. Procédé selon l'une des revendications 8 à 13,
**caractérisé en ce que**
l'au moins un corps vert de pièce moulée (10) est humidifié à l'étape (b), dans lequel l'humidité du corps vert de pièce moulée (10) et/ou du volume ambiant est régulée, par exemple grâce à une saturation avec de la vapeur de la phase gazeuse entourant le corps vert de pièce moulée (10).

15. Procédé selon l'une des revendications 8 à 14,
**caractérisé en ce que**
le procédé est mis en oeuvre de manière continue.

16. Procédé selon l'une des revendications 8 à 15,
**caractérisé en ce que**
sur au moins une partie d'au moins une surface de l'au moins un corps vert de pièce moulée (10), après l'étape (a), de l'au moins un corps vert de pièce moulée (10) séché au moins partiellement, après l'étape (b) ou de l'au moins une pièce moulée en céramique cuite (1), après l'étape (c), est appliqué au moins un revêtement de surface.
